# EUROPEAN PATENT APPLICATION

(11) **EP 4 738 181 A1**
(43) Date of publication of application: **06.05.2026**
(21) Application number: 23943293.3
(22) Date of filing: 10.11.2023
(51) Int. Cl.: G06F 40/166, G06F 16/332, G06F 16/335, G06F 40/35

(54) **SESSION INFORMATION PROCESSING METHOD, APPARATUS AND SYSTEM, AND STATEMENT GENERATION METHOD AND APPARATUS**

(30) Priority: 30.06.2023 CN 202310795163; 19.07.2023 CN 202310891118
(71) Applicant: Guangdong Midea Kitchen Appliances Manufacturing Co., Ltd., Foshan, Guangdong 528311 (CN)
(72) Inventor: SUN, Yuwen, Foshan, Guangdong 528311 (CN); QIAN, Zhida, Foshan, Guangdong 528311 (CN); PENG, Shufang, Foshan, Guangdong 528311 (CN)
(74) Representative: RGTH
(86) International application number: PCT/CN2023/131091
(87) International publication number: WO 2025/000814

(57) **Abstract**

The present application provides a session information processing method, apparatus and system, and a statement generation method and apparatus. The session information processing method comprises: receiving a first input of a user, wherein the first input comprises first session information; in response to the first input, carrying out matching on the first session information in a first database; when the matching is successful, inputting, into a first model, second session information and first reply information that correspond to the first session information, and the first model outputs second reply information based on the second session information and the first reply information; and displaying the second reply information, wherein the first database is a professional knowledge base in the professional field to which the first session information belongs, and the first model is an intelligent dialogue model.

## Description

### CROSS-REFERENCE TO RELATED APPLICATIONS

This application claims priority to Chinese Patent Application No. 202310795163.2 filed with the China National Intellectual Property Administration on June 30, 2023 and entitled "STATEMENT GENERATION METHOD AND DEVICE, COOKING EQUIPMENT AND COMPUTER-READABLE STORAGE MEDIUM", the entire contents of which are incorporated herein by reference.

This application claims priority to Chinese Patent Application No. 202310891118.7 filed with the China National Intellectual Property Administration on July 19, 2023 and entitled "SESSION INFORMATION PROCESSING METHOD, DEVICE AND SYSTEM, ELECTRONIC EQUIPMENT AND STORAGE MEDIUM", the entire contents of which are incorporated herein by reference.

### FIELD

The present application relates to the technical field of intelligent question-answering, and specifically relates to a method for processing conversation information, apparatus and system, and a sentence generation method and apparatus.

### BACKGROUND

Currently, for professional knowledge question-answering in specific fields, retrieval-based knowledge matching is generally established, comprising but not limited to, retrieval methods such as question-answer pairs and knowledge graph retrieval. However, when question-answering is performed through the above methods, generated answers are often fixed and highly professional, making them inconvenient to be understood. Furthermore, the above retrieval methods have limitations, which may easily lead to failure in matching the question or the answer, to reduce the accuracy and humanization of question-answering results.

### SUMMARY

The present application aims to solve at least one of the technical problems existing in the prior art or related art.

Thus, a first aspect of the present application provides a method for processing conversation information.

A second aspect of the present application provides a conversation information processing apparatus.

A third aspect of the present application provides a conversation information processing system.

A fourth aspect of the present application provides a sentence generation method.

A fifth aspect of the present application provides a sentence generation apparatus.

A sixth aspect of the present application provides another sentence generation apparatus.

A seventh aspect of the present application provides an electronic device.

An eighth aspect of the present application provides a computer-readable storage medium.

A ninth aspect of the present application provides a cooking device.

In view of this, according to the first aspect of the present application, a method for processing conversation information is provided, comprising: receiving a first input of a user, wherein the first input comprises first conversation information; in response to the first input, performing matching of the first conversation information in a first database; in the case that the matching is successful, inputting second conversation information and first reply information that correspond to the first conversation information into a first model, wherein the first model outputs second reply information based on the second conversation information and the first reply information; and displaying the second reply information, wherein the first database is a professional knowledge base corresponding to a professional field to which the first conversation information belongs, and the first model is an intelligent dialogue model.

The method for processing conversation information provided by the present application is configured to answer conversation information raised by users in professional fields such as a cooking field and feed back accurate and easy-to-understand reply information to users, and can improve the correctness of the results of intelligent question-answering and enhance the humanized characteristics of intelligent question-answering.

Furthermore, the method for processing conversation information provided by the present application can be specifically executed by an electronic device, and the electronic device has data analyzing and data processing capabilities.

Specifically, in the method for processing conversation information provided by the present application, in the case that a user asks a question corresponding to a professional field such as the cooking field through an electronic device, the user can directly input first conversation information through the first input for the electronic device. The electronic device receives and responds to the first input of the user, and compares and matches the first conversation information input by the user with a professional knowledge base (i.e., a first database) corresponding to the professional field to which the first conversation information belongs. Wherein, the first database stores a plurality of sets of conversation information and reply information in the professional field to which the first conversation information belongs. On the above basis, in the case that the first database successfully matches the first conversation information input by the user, second conversation information and first reply information in the first database that correspond to the first conversation information are obtained, and the first reply information is highly professional. Furthermore, the obtained first reply information and second conversation information are input into an intelligent dialogue model, i.e., a first model, to optimize the highly professional first reply information through the first model. Specifically, the first reply information and the second conversation information are integrated through the first model, and the first reply information is polished and revised based on information obtained through integration, to obtain second reply information that is less professional and easy for the user to understand, and the second reply information is output and displayed to the user. In this way, by combining the professional knowledge base corresponding to the professional field and the intelligent dialogue model, the user's questions are answered intelligently, and then this can ensure the professionalism of the results of question-answering and thus ensure the correctness of the results of question-answering, and meanwhile facilitate user understanding, enhance the humanized characteristics of the results of question-answering, and ensure the effect of question-answering.

The method for processing conversation information according to the present application can further comprise the following additional technical features.

In some technical solutions, after matching the first conversation information in the first database, the method for processing conversation information further comprises: in the case of a matching failure, inputting the first conversation information into the first model, wherein the first model outputs third reply information based on the first conversation information; and displaying the third reply information.

In the technical solution, in the case that the first database fails to be matched the first conversation information input by the user, the first conversation information input by the user is directly input into the above intelligent dialogue model, i.e., the first model, to directly answer the first conversation information input by the user through the first model to obtain the third reply information generated by the first model, and output and display the third reply information to the user. In this way, in the case that the first conversation information fails to be matched with the professional knowledge base corresponding to the professional field to which it belongs, a fallback answer is provided to the first conversation information through the intelligent dialogue model, which ensures the effective response rate to the user's question.

In some technical solutions, the first database comprises a plurality of conversation information entries, and performing the matching of the first conversation information in the first database comprises: encoding the first conversation information; performing similarity matching between the encoded first conversation information and the plurality of conversation information entries in the first database; determining that the first conversation information successfully matches the first database in the case that conversation information semantically identical to the first conversation information exists in the first database; and determining that the first conversation information fails to be matched with the first database in the case that any conversation information in the first database is semantically different from the first conversation information.

In the technical solution, after the electronic device receives the first conversation information input by the user, the electronic device will perform encoding processing on the first conversation information input by the user, and then performs semantic similarity matching between the first database and the encoded first conversation information. Furthermore, the first database stores a plurality of sets of conversation information and reply information corresponding to the professional field to which the first conversation information belongs. On the above basis, in the case that there is conversation information in the first database that is semantically identical or highly similar to the first conversation information, the electronic device determines that the first database successfully matches the first conversation information. In the case that there is not any conversation information in the first database that is semantically identical or highly similar to the first conversation information, the electronic device determines that the first database fails to be matched with the first conversation information. In this way, the accuracy of the result of the similarity matching between the first database and the first conversation information is ensured, to ensure the accuracy of the results of subsequent intelligent question-answering.

In some technical solutions, before encoding the first conversation information, the method for processing conversation information further comprises: performing preprocessing on the first conversation information to obtain the preprocessed first conversation information; wherein the preprocessing comprises at least one of the following: extracting useful features from the first conversation information, and filtering out noise information in the first conversation information.

In the technical solution, before the electronic device performs encoding processing on the first conversation information input by the user, the electronic device further preprocesses the first conversation information input by the user to clean the first conversation information, eliminate interference information in the first conversation information, and extract key feature information from the first conversation information, to obtain the first conversation information with accurate semantics. In this way, the accuracy of the first conversation information involved in similarity matching is ensured, which in turn ensures the accuracy of the result of the similarity matching between the first database and the first conversation information and ensures the accuracy of the result of the subsequent intelligent question-answering.

In some technical solutions, before encoding the first conversation information, the method for processing conversation information further comprises: in the case that the language type of the first conversation information is inconsistent with that of the first database, inputting the first conversation information into the first model, wherein the first model then converts the language type of the first conversation information into the language type of the first database; and displaying the second reply information, comprising: displaying the second reply information based on the language type of the first conversation information.

In the technical solution, after the electronic device receives the first conversation information input by the user and before the electronic device performs encoding processing on the first conversation information, the electronic device further compares the language type of the first database with that of the first conversation information. On the above basis, in the case that the language type of the first database is different from that of the first conversation information, the electronic device outputs the first conversation information input by the user to the first model, to convert the language type of the first conversation information through the first model to obtain the first conversation information whose language type is the same as that of the first database, and then answers the user's question based on the matching result between the first conversation information obtained from conversion and the first database. Wherein, in the case that the language type of the first database is different from that of the first conversation information, after the electronic device answers the first conversation information, it outputs and displays the second reply information with the same language type based on the language type of the first conversation information input by the user, to ensure the consistency between the language types of input information and output information, thus facilitating user understanding. In this way, by the translation capability of the first model, a multilingual intelligent question-answering dialogue is realized, which expands the application scope of intelligent question-answering and ensures the effect of question-answering.

In some technical solutions, the encoding processing comprises at least one of the following: vector encoding processing and cosine encoding processing.

In the technical solution, during the process that the electronic device performs encoding processing on the first conversation information input by the user, cosine encoding processing or vector encoding processing can be specifically performed on the above first conversation information to obtain corresponding first encoded information.

In some technical solutions, the matching algorithms for similarity matching comprise at least one of the following: a similarity matching algorithm based on Euclidean distance, a similarity matching algorithm based on cosine distance, and a similarity matching algorithm based on a deep learning model.

In the technical solution, during the process that the electronic device performs semantic similarity matching between the above first database and the first conversation information input by the user, the similarity matching algorithm based on a deep learning model, the similarity matching algorithm based on cosine distance, or the similarity matching algorithm based on Euclidean distance can be specifically adopted.

According to the second aspect of the present application, a conversation information processing apparatus is provided, comprising: a receiving unit configured to receive a first input of a user, wherein the first input comprises first conversation information; a processing unit configured to perform matching of the first conversation information in a first database in response to the first input; and in the case of a successful matching, inputting second conversation information and first reply information corresponding to the first conversation information into a first model, wherein the first model outputs second reply information based on the second conversation information and the first reply information; a display unit configured to display the second reply information; wherein the first database is a professional knowledge base corresponding to a professional field to which the first conversation information belongs, and the first model is an intelligent dialogue model.

The conversation information processing apparatus provided in the present application is configured to answer conversation information raised by users corresponding to professional fields such as the cooking field, and feed back accurate and easy-to-understand reply information to users, which can improve the correctness of the result of intelligent question-answering and enhance the humanized characteristics of intelligent question-answering.

Specifically, the conversation information processing apparatus provided in this application comprises the receiving unit and the processing unit. In the case that a user asks a question corresponding to a professional field such as the cooking field via an electronic device, the user can directly input the first conversation information through the first input for the electronic device. The receiving unit receives the first input of the user, and the processing unit, in response to the first input, obtains the first conversation information input by the user and compares and matches the first conversation information with the professional knowledge base (i.e., the first database) in the professional field to which the first conversation information belongs. Wherein, the first database stores a plurality of sets of conversation information and reply information corresponding to the professional field to which the first conversation information belongs. On the above basis, in the case that the first database successfully matches the first conversation information input by the user, the processing unit obtains the second conversation information and the first reply information in the first database corresponding to the first conversation information, and the first reply information is highly professional. Furthermore, the processing unit inputs the obtained first reply information and second conversation information into an intelligent dialogue model, i.e., the first model, to optimize the highly professional first reply information through the first model. Specifically, the first reply information and the second conversation information are integrated through the first model, and the first reply information is polished and revised based on the information obtained through integration, to obtain the second reply information that is less professional and easy for the user to understand, and the second reply information is output and displayed to the user. In this way, by combining the professional knowledge base corresponding to the professional field and the intelligent dialogue model, the user's questions are answered intelligently, and then this can ensure the professionalism of the result of question-answering results and thus ensure the correctness of the results of question-answering, and meanwhile facilitate user understanding, enhance the humanized characteristics of the results of question-answering, and ensure the effect of question-answering.

According to the third aspect of the present application, a conversation information processing system is provided, comprising: a first model, which is an intelligent dialogue model; a first database in which a plurality of sets of conversation information and reply information are stored; and a processor configured to perform the steps of the method for processing conversation information according to any one of the above technical solutions.

The conversation information processing system provided in the third aspect of the present application comprises the first model, the first database and the processor. Wherein, the first model is an intelligent dialogue model, the first database is a professional knowledge base, and the first database stores a plurality of sets of conversation information and reply information corresponding to a professional field such as the cooking field.

Furthermore, the processor is configured to perform the steps of the method for processing conversation information according to any one of the above technical solutions. Therefore, the conversation information processing system provided in the third aspect of the present application has all the beneficial effects of the method for processing conversation information according to any one of the technical solutions in the first aspect, which will not be repeated here.

According to the fourth aspect of the present application, a sentence generation method is provided, comprising: in response to receiving a first question sentence, identifying intent information in the first question sentence; determining a target question sentence matching the first question sentence based on the intent information; and generating an answer sentence based on a target corpus selected from at least two corpora, wherein the target corpus matches the sentence category of the target question sentence.

The technical solution of the present application provides a sentence generation method applied to a question-answering system, and the question-answering system can answer the first question sentence input by a user into the question-answering system by the sentence generation method. Through intent Identification, the question-answering system determines the target question sentence matching the first question sentence, find a corresponding target corpus based on the target question sentence, and generate the answer sentence through a target corpus data in the target corpus. By first performing intent Identification and classification on the first question sentence, the present application enables the distribution of different types of questions, i.e., generating corresponding answer sentences through the target corpus data in different target corpora, and can answer different categories of question sentences only through one intent Identification, which reduces the waste of computing power and improves the efficiency of generating the answer sentence.

In the technical solution, the question-answering system comprises an intent matching module, the intent information of the first question sentence can be identified through the intent matching module, and the corresponding target question sentence of the first question sentence can be found based on the intent information. It is found that the target question sentence is a preset question sentence, and the semantics of the target question sentence is similar or identical to that of the first question sentence. That is, through the identified intent information, the first question sentence output by the user can be converted into a standardized target question sentence.

In the technical solution, the question-answering system can find a matching target corpus among different corpora based on the sentence category. The sentence categories comprise, but are not limited to, a sentence of the structured question category and a sentence of the preset question category. By intent Identification, the question-answering system determines the target question sentence and the corresponding sentence category of the target question sentence, and thus can accurately select the corresponding target corpus, and Identification modules adaptable to different sentence categories need not be set in the question-answering system, which reduces the computing power consumption of the question-answering system and further improves the processing efficiency.

Wherein, the sentence of the structured question category typically refers to a simple real-time question, which is stored in a structured manner, for example, ingredients and their quantities required in a recipe, cooking time, cooking temperature, cooking steps, etc. The sentence of the preset question category typically refers to a complex question, which is generally stored in a question-answer corresponding form, that is, a corresponding standard answer is found through the sentence of the preset question category and then output as the answer sentence.

In the technical solution of the present application, after receiving the first question sentence, the question-answering system determines the standardized target question sentence corresponding to the first question sentence through intent Identification, find the corresponding target corpus based on the sentence category of the target question sentence, and generate the answer sentence through the target corpus data in the target corpus, and thus it is unnecessary to repeatedly process the first question sentence based on different sentence categories, which reduces the energy consumption of the question-answering system and improves the efficiency of the question-answering system in outputting the answer sentence.

In some technical solutions, determining the target question sentence matching the first question sentence based on the intent information comprises: obtaining at least two second question sentences based on the intent information, wherein the at least two second question sentences are associated with the intent information; and selecting the target question sentence from the at least two second question sentences.

The technical solutions provide the intent information obtained through intent Identification, and can obtain a plurality of the second question sentences semantically similar to the first question sentence, and then the target question sentence matching the first question sentence is obtained by selecting the plurality of the second question sentences, which improves the accuracy of the target question sentence obtained through selecting.

In the technical solution of the present application, the intent matching module is disposed in the question-answering system. The intent matching module can preliminarily recall candidate similar second question sentences. After the plurality of the second question sentences are obtained, a closest target question sentence can be obtained by comparing the plurality of the second question sentences with the first question sentence respectively.

In the technical solution of the present application, the question-answering system can perform two-level selecting based on the intent information, that is, a plurality of second question sentences with similar semantics are found first, and then the target question sentence semantically matching the first question sentence are selected from the plurality of the second question sentences, which improves the accuracy of obtaining the matching target question sentence.

The above sentence generation method according to the present application can further comprise the following additional technical features:

In some technical solutions, selecting the target question sentence from at least two second question sentences comprises: obtaining the semantic similarity between the first question sentence and each of the at least two second question sentences; and selecting the target question sentence from the at least two second question sentences based on the semantic similarity.

The technical solutions provide a process of selecting the target question sentence from a plurality of second question sentences based on the semantic similarity.

In the technical solution of the present application, the semantic similarity between the first question sentence and each second question sentence is calculated respectively. The plurality of second question sentences are sorted based on the semantic similarity, and the second question sentence with the highest semantic similarity is taken as the target question sentence, which improves the matching degree between the target question sentence obtained through selecting and the first question sentence.

Wherein, after obtaining the plurality of the second question sentences, the question-answering system calculates the semantic similarity between the plurality of the second question sentences and the first question sentence, and then selects the second question sentence with the highest semantic similarity value as the matching target question sentence.

In the technical solution of the present application, after the question-answering system finds the plurality of the second question sentences through the intent information, it can accurately calculate a plurality of semantic similarities between the plurality of the second question sentences and the first question sentence, and find the target question sentence from the plurality of the second question sentences based on the semantic similarities, to further improve the matching degree between the target question sentence and the first question sentence.

In some technical solutions, obtaining the semantic similarity between the first question sentence and each of the at least two second question sentences comprises: obtaining a first semantic vector of the first question sentence and a second semantic vector of each second question sentence; and calculating the semantic similarity based on the first semantic vector and the second semantic vector.

The technical solutions provide converting a plurality of second question sentences and the first question sentence into semantic vectors, and calculating the semantic similarity between each second question sentence and the first question sentence based on the semantic vectors.

In the technical solution of the present application, the first semantic vector corresponding to the first question sentence and the second semantic vectors corresponding to the second question sentences are obtained respectively, the number of the second semantic vectors is the same as that of the second question sentences, and the second semantic vectors are in one-to-one correspondence with the second question sentences. By calculating the similarity between the first semantic vector and the second semantic vectors respectively, a plurality of semantic similarities can be obtained, and the semantic similarities are in one-to-one correspondence with the second semantic vectors.

In the technical solution of the present application, by converting both the first question sentence and the second question sentences into high-dimensional semantic vectors, and by the similarity calculation of the high-dimensional semantic vectors, the corresponding target question sentence is selected, which can improve the accuracy of determining the target question sentence.

In some technical solutions, obtaining the semantic similarity between the first question sentence and each of the at least two second question sentences comprises: inputting the first question sentence and each second question sentence into a pre-trained model to determine the semantic similarity.

The technical solutions provide a process of calculating a plurality of semantic similarities between a plurality of second question sentences and the first question sentence through the trained model by inputting the first question sentence and the second question sentences into the pre-trained model.

In the technical solution of the present application, through providing the pre-trained model in the question-answering system, in the case of obtaining a plurality of second question sentences, the plurality of second question sentences and the first question sentence are input into the pre-trained model, and then a plurality of semantic similarities between the plurality of second question sentences and the first question sentence can be calculated accurately.

In some technical solutions, before generating an answer sentence based on the target corpus selected from at least two corpora, the technical solutions comprise: selecting the target corpus among the at least two corpora based on identification information in the target question sentence, wherein the identification information corresponds to the sentence category; wherein, the sentence categories comprise at least one of the preset question category and the structured question category.

The technical solutions provide that the question-answering system can select the target corpus from at least two corpora based on the identification information corresponding to the target question sentence, that is, it is ensured that the question-answering system determines the matching target corpus after determining the target question sentence corresponding to the first question sentence.

In the technical solution of the present application, the target question sentence is a question sentence preset in the question-answering system, and each target question sentence is correspondingly disposed with relevant identification information. After the question-answering system determines the target question sentence corresponding to the first question sentence, it determines the sentence category of the target question sentence by reading the identification information of the target question sentence, to find the corresponding target corpus.

In the technical solution of the present application, the number of corpora disposed in the question-answering system matches the number of sentence categories and the number of identification information, and the corpora, sentence categories and identification information are in one-to-one correspondence.

In the technical solution of the present application, the sentence categories comprise at least one of the preset question categories and the structured question category. Sentences of the structured question category are typically simple real-time questions, which are stored in a structured manner. Sentences of the preset question category are typically complex questions, which are generally stored in a question-answer corresponding form, that is, corresponding standard answers are found through the sentences of the preset question category and then output as answer sentences.

In the technical solution of the present application, by arranging corresponding identification information in the target question sentences prestored in the question-answering system, it is ensured that after the question-answering system obtains the target question sentence matching the first question sentence, it can quickly determine the sentence category corresponding to the target question sentence, and determine the target corpus among the plurality of corpora accordingly.

In some technical solutions, the sentence category is the structured question category; generating the answer sentence based on the target corpus selected from at least two corpora comprises: determining a target query sentence based on the target question sentence; querying the target corpus data in the target corpus by the target query sentence; and generating the answer sentence based on the target corpus data.

The technical solutions provide a specific process for the question-answering system to generate an answer sentence in the case that the target question sentence is a sentence of the structured question category.

In the technical solution of the present application, when the sentence category is a structured question, the target query sentence matching the target question sentence is retrieved. The target query sentence is configured to search for the corresponding target corpus data in the target corpus corresponding to the structured question category, and after the corresponding target corpus data is found, a corresponding answer sentence is generated through the target corpus data.

Wherein, the target query sentence is a structured query code.

Specifically, when the target question sentence is a sentence of the structured question category, the template of the corresponding target query sentence can be found through the target question sentence. By extracting entity nouns from the target question sentence and inserting the entity nouns into the template, the target query sentence can be obtained. The target corpus data can be found from the target corpus through the target query sentence, and the answer sentence can be output based on the target corpus data.

In the technical solution of the present application, when the target question sentence is the sentence of the structured question category, the question-answering system can first determine the corresponding target query sentence based on the target question sentence, then find the target corpus data from the corresponding target corpus through the target query sentence, and further generate the corresponding answer sentence based on the target corpus data, to ensure the matching degree between the answer sentence and the target question sentence.

In some technical solutions, determining the target query sentence based on the target question sentence comprises: extracting noun words and remaining words from the target question sentence; determining a matching query sentence template based on the remaining words; and inputting the noun words into the query sentence template to generate the target query sentence.

The technical solutions provide a process of searching for the query sentence template of the target query sentence and determining the target query sentence based on the query sentence template when the target question sentence is the sentence of the structured question category.

In the technical solution of the present application, the target query sentences corresponding to the sentences of the structured question category are further structured query sentences. That is, different target query sentences correspond to different query sentence templates. The query sentence template can be determined by parsing the remaining words in the target question sentence, and then the noun words in the target question sentence are inserted into the query sentence template, to determine the target query sentence.

Wherein, the noun words refer to the entity words in the target question sentence, and the remaining words refer to non-entity words in a target sentence, i.e., all words except the noun words.

In the technical solution of the present application, the question-answering system can find the query sentence template matching the target question sentence by performing semantic analysis on the remaining words.

In the technical solution of the present application, after the corresponding query sentence template is determined, the noun words in the target question sentence are inserted into the query sentence template to obtain the corresponding target query sentence.

In the technical solution of the present application, by parsing the target question sentence of the structured question category, the noun words and the remaining words contained therein can be obtained, the corresponding query sentence template is found through the remaining words, and then the noun words are inserted into the query sentence template to obtain the corresponding target query sentence, thus improving the accuracy of obtaining the target query sentence, further improving the accuracy of the found target corpus data, and to enhance the matching degree between the generated answer sentence and the first question sentence.

In some technical solutions, the sentence category is the preset question category; generating the answer sentence based on the target corpus selected from at least two corpora comprises retrieving the answer sentence based on the target question sentence and the preset mapping relationship, wherein the preset mapping relationship represents a correspondence between the target question sentence and the answer sentence in the target corpus.

The technical solutions provide a specific process for the question-answering system to generate the answer sentence in the case that the target question sentence is the sentence of the preset question category.

In the technical solution of the present application, the question-answering system stores the answer sentence corresponding to the target question sentence of the preset question category, as well as the preset mapping relationship between the answer sentence and the target question sentence of the preset question category.

Wherein, the target corpus corresponding to the target question sentence of the preset question category stores the preset mapping relationship between the answer sentence and the target question sentence of the preset question category, as well as the corresponding answer sentence. After the target question sentence of the preset question category is determined, the corresponding answer sentence is found by the preset mapping relationship in the target corpus, and then output.

In the technical solution of the present application, when the target question sentence is the sentence of the preset question category, the corresponding answer sentence can be automatically found from the target corpus through the preset mapping relationship, which ensures the relevance and matching degree between the answer sentence and the first question sentence.

In some technical solutions, before identifying the intention information in the first question sentence, the technical solutions further comprise: in response to receiving the first question sentence, updating the first question sentence based on the words in a preset vocabulary bank.

The technical solutions provide updating the first question sentence through the words in the preset vocabulary bank after receiving the first question sentence, which can improve the accuracy and efficiency of the question-answering system in finding the target question sentence through semantic information.

In the embodiments of the present application, the preset vocabulary bank is a vocabulary pre-stored in the question-answering system. Updating the words in the first question sentence with the words in the preset vocabulary bank can improve the efficiency and accuracy of the question-answering system in semantically identifying the first question sentence.

In some technical solutions, in response to receiving the first question sentence, updating the first question sentence based on the words in the preset vocabulary bank comprises: extracting the entity nouns from the first question sentence; searching for the corresponding abstract nouns in the preset vocabulary bank based on the entity nouns; and replacing the entity nouns in the first question sentence with the abstract nouns to update the first question sentence.

The technical solutions provide the specific process of replacing the entity nouns in the first question sentence with the abstract nouns in the preset vocabulary bank.

Specifically, the entity nouns refer to nouns with a relatively narrow reference scope in the first question sentence, while the abstract nouns refer to nouns with a relatively broad reference scope in the preset vocabulary bank. There is a semantic inclusion relationship between the abstract nouns found through the entity nouns.

In the technical solution of the present application, different entity nouns may correspond to the same abstract noun in the preset vocabulary bank.

In the technical solution of the present application, by replacing the entity nouns in the first question sentence with the abstract nouns in the preset vocabulary bank after receiving the first question sentence, the computing power required for extracting the intention information for the first question sentence can be reduced, and the efficiency of obtaining the intention information corresponding to the first question sentence can further be improved.

According to the fifth aspect of the present application, a sentence generation apparatus is provided, comprising: an identification module configured to, in response to receiving a first question sentence, identify intention information in a first question sentence; a determining module configured to determine a target question sentence matching the first question sentence based on the intention information; and a generation module configured to generate an answer sentence based on a target corpus selected from at least two corpora, wherein the target corpus matches the sentence category of the target question sentence.

The technical solution of the present application provides the sentence generation apparatus which is applied to the question-answering system. The question-answering system can answer the first question sentence input by the user into the question-answering system by the sentence generation apparatus. By intention Identification, the question-answering system determines the target question sentence matching the first question sentence, find the corresponding target corpus based on the target question sentence, and generate an answer sentence through the target corpus data in the target corpus. In the present application, intention Identification and classification are first performed on the first question sentence, to realize the distribution of different types of questions, that is, corresponding answer sentences are generated through the target corpus data in different target corpora. Question sentences of different categories can be answered only through one intention Identification, which reduces the waste of computing power and improves the efficiency of generating answer sentences.

In the technical solution, the question-answering system comprises an intention matching module, through which the intention information of the first question sentence can be identifyd, and the target question sentence corresponding to the first question sentence can be found based on the intention information. The found target question sentence is a preset question sentence, and the semantics of the target question sentence is similar to or the same as that of the first question sentence. That is, based on the identifyd intention information, the first question sentence input by the user can be converted into a standardized target question sentence.

In the technical solution, the question-answering system can find a matching target corpus among different corpora based on the sentence category. The sentence categories comprise, but are not limited to, sentences of the structured question category and sentences of the preset question category. The question-answering system determines the target question sentence and the corresponding sentence category of the target question sentence by intention Identification, and then can accurately select the corresponding target corpus, and Identification modules adaptable to different sentence categories need not be provided in the question-answering system, which reduces the computing power consumption of the question-answering system and further improves the processing efficiency.

Wherein, the sentence of the structured question category typically refers to a simple real-time question, which is stored in a structured manner, for example, ingredients and their quantities required in a recipe, cooking time, cooking temperature, cooking steps, etc. The sentence of the preset question category typically refers to a complex question, which is generally stored in a question-answer corresponding form, that is, a corresponding standard answer is found through the sentence of the preset question category and then output as the answer sentence.

In the technical solution of the present application, after receiving the first question sentence, the question-answering system determines the standardized target question sentence corresponding to the first question sentence through the intention Identification, find the corresponding target corpus based on the sentence category of the target question sentence, and generate the answer sentence through the target corpus data in the target corpus, and thus it is unnecessary to repeatedly process the first question sentence based on different sentence categories, which reduces the energy consumption of the question-answering system and improves the efficiency of the question-answering system in outputting the answer sentence.

According to the sixth aspect of the present application, another sentence generation apparatus is provided, comprising: a memory storing a program or an instruction therein; and a processor executing the program or instruction stored in the memory to perform the steps of the sentence generation method in any one of the technical solutions of the fourth aspect, thus having all the beneficial technical effects of the sentence generation method in any one of the technical solutions of the fourth aspect, which will not be repeated here.

According to the seventh aspect of the present application, an electronic device is provided, comprising a processor and a memory. The memory stores a program or an instruction executable by the processor. When the program or instruction is executed by the processor, the processor is caused to perform the steps of the method for processing conversation information in any one of the above technical solutions; alternatively, when the program or instruction is executed by the processor, the processor is caused to perform the steps of the sentence generation method in any one of the above technical solutions. Therefore, the electronic device provided in the seventh aspect of the present application has all the beneficial effects of the method for processing conversation information in any one of the technical solutions of the first aspect, or the electronic device provided in the seventh aspect of the present application has all the beneficial effects of the sentence generation method in any one of the technical solutions of the fourth aspect, which will not be repeated here.

According to the eighth aspect of the present application, a computer-readable storage medium is provided, in which a program or an instruction is stored. When the program or instruction is executed by a processor, the method for processing conversation information in any one of the above technical solutions is performed; alternatively, when the program or instruction is executed by a processor, the sentence generation method in any one of the aforementioned technical solutions is performed. Therefore, the computer-readable storage medium provided in the eighth aspect of the present application has all the beneficial effects of the method for processing conversation information in any one of the technical solutions of the first aspect, or the computer-readable storage medium provided in the eighth aspect of the present application has all the beneficial effects of the sentence generation method in any one of the technical solutions of the fourth aspect, which will not be repeated here.

According to the ninth aspect of the present application, a cooking device is provided, comprising: the sentence generation apparatus defined in the fifth aspect or the sixth aspect as mentioned above, and/or the computer-readable storage medium defined in the eighth aspect as mentioned above, thus having all the beneficial technical effects of the sentence generation apparatus defined in the fifth aspect or the sixth aspect and/or the computer-readable storage medium defined in the eighth aspect, which will not be repeated here.

The additional aspects and advantages of the present application will become apparent in the following description or may be learned through practice of the present application.

### BRIEF DESCRIPTION OF THE DRAWINGS

The above-mentioned and/or additional aspects and advantages of the present application will become apparent and easily understandable from the description of the embodiments in conjunction with the following accompanying drawings, wherein:
FIG. 1 shows a first schematic flow chart of a method for processing conversation information according to an embodiment of the present application;
FIG.2 shows a second schematic flow chart of a method for processing conversation information according to an embodiment of the present application;
FIG.3 shows a third schematic flow chart of a method for processing conversation information according to an embodiment of the present application;
FIG.4 shows a block diagram of the structure of a conversation information processing apparatus according to an embodiment of the present application;
FIG.5shows a block diagram of the structure of a conversation information processing system according to an embodiment of the present application;
FIG.6 shows a first schematic flow chart of a sentence generation method according to an embodiment of the present application;
FIG.7 shows a second schematic flow chart of a sentence generation method according to an embodiment of the present application;
FIG.8 shows a third schematic flow chart of a sentence generation method according to an embodiment of the present application;
FIG.9 shows a fourth schematic flow chart of a sentence generation method according to an embodiment of the present application;
FIG.10 shows a fifth schematic flow chart of a sentence generation method according to an embodiment of the present application;
FIG.11 shows a first block diagram of the structure of a sentence generation apparatus according to an embodiment of the present application;
FIG.12 shows a second block diagram of the structure of a sentence generation apparatus according to an embodiment of the present application;
FIG.13 shows a block diagram of the structure of an electronic device according to an embodiment of the present application; and
FIG.14 shows a block diagram of the structure of a cooking device according to an embodiment of the present application.

### DETAILED DESCRIPTION OF THE APPLICATION

To more clearly understand the above purposes, features and advantages of the present application, the present application will be further detailed hereinafter in combination with the accompanying drawings and embodiments. It should be indicated that in the case of no conflict, the embodiments and the features in the embodiments of the present application can be combined with each other.

Many details are illustrated in the following description for the convenience of a thorough understanding to the present application, but the present application can further be performed using other embodiments other than these described herein. Therefore, the protection scope of the present application is not limited to the specific embodiments disclosed in the following text.

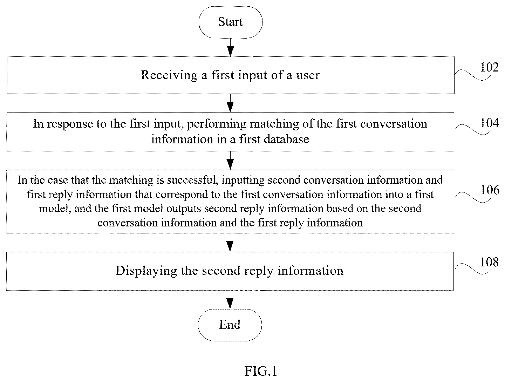

A conversation (also referred to as a session) information processing method, apparatus and system, and a sentence (also referred to as a statement) generation method and apparatus provided by the embodiments of the present application are detailed below through specific embodiments and the application scenarios thereof in combination with FIG. 1 to FIG.14.

In an embodiment of the present application, as shown in FIG. 1, a method for processing conversation information can specifically comprise the following S102 to S108:
S102, receiving a first input of a user;
S104, in response to the first input, performing matching of the first conversation information in a first database;
S106, in the case that the matching is successful, inputting second conversation information and first reply information that correspond to the first conversation information into a first model, wherein the first model outputs second reply information based on the second conversation information and the first reply information; and
S108, displaying the second reply information;
wherein, the first model is an intelligent dialogue model, the first database is a professional knowledge base corresponding to a professional field, e.g., a cooking field, to which the first conversation information belongs.

The method for processing conversation information provided by the present application is configured to answer conversation information raised by users corresponding to professional fields such as a cooking field and feed back accurate and easy-to-understand reply information to users, and can improve the correctness of the results of intelligent question-answering and enhance the humanized characteristics of intelligent question-answering.

Furthermore, the method for processing conversation information provided by the present application can be specifically executed by an electronic device, and the electronic device has data analyzing and data processing capabilities.

In actual application processes, the above electronic device can specifically be a smart device such as a smartphone, a smart watch, a tablet computer and a laptop, which is not specifically limited herein.

Specifically, in the method for processing conversation information provided by the present application, in the case that a user asks a question corresponding to a professional field such as the cooking field through an electronic device, the user can directly input first conversation information through the first input for the electronic device. The electronic device receives and responds to the first input of the user, and compares and matches the first conversation information input by the user with a professional knowledge base (i.e., a first database) corresponding to the professional field to which the first conversation information belongs. Wherein, the first database stores a plurality of sets of conversation information and reply information corresponding to the professional field to which the first conversation information belongs. On the above basis, in the case that the first database successfully matches the first conversation information input by the user, second conversation information and first reply information in the first database corresponding to the first conversation information are obtained, and the first reply information is highly professional. Furthermore, the obtained first reply information and second conversation information are input into an intelligent dialogue model, i.e., a first model, to optimize the highly professional first reply information through the first model. Specifically, the first reply information and the second conversation information are integrated through the first model, and the first reply information is polished and revised based on information obtained through integration, to obtain second reply information that is less professional and easy for the user to understand, and the second reply information is output and displayed to the user. In this way, by combining the professional knowledge base corresponding to the professional field and the intelligent dialogue model, the user's questions are answered intelligently, and then this can ensure the professionalism of the results of question-answering and thus ensure the correctness of the results of question-answering, and meanwhile facilitate user understanding, enhance the humanized characteristics of the results of question-answering, and ensure the effect of question-answering.

Wherein, the above first input can specifically be a touch input performed by the user on the question-answering interface of the electronic device. The touch input can specifically comprise a single-click input, double-click input, swipe input, input along a preset trajectory, etc. Those skilled in the art can set the specific form of the above first input based on actual circumstances, which is not specifically limited herein.

In an actual application process, an information input control can be displayed in the above question-answering interface. The above first input can specifically be the touch input performed by the user on the information input control. In response to the touch input, the electronic device outputs corresponding second reply information for the first conversation information submitted by the user.

Wherein, the above information input control can specifically be a text input control or a voice input control. Furthermore, the above first conversation information can specifically be text information or voice information, which is not specifically limited herein.

On the above basis, in the process that the electronic device answers the first conversation information input by the user and thus outputs the second reply information, in the case that the above first conversation information is the text information, the electronic device directly answers the first conversation information input by the user based on the text information. Whereas in the case that the above first conversation information is the voice information, the electronic device converts the voice information into text information first, and then answers the first conversation information input by the user based on the text information.

Furthermore, a plurality of sets of conversation information and reply information corresponding to the professional field to which the above first conversation information belongs are stored in the first database. In the process of comparing and matching the first database with the first conversation information input by the user, specifically, a semantic similarity comparison is performed between the first conversation information input by the user and the plurality of conversation information entries stored in the first database. On this basis, in the case that there is conversation information in the first database that is semantically identical or highly similar to the first conversation information, it is determined that the first database successfully matches with the aforementioned first conversation information; whereas in the case that there is not any conversation information in the first database that is semantically identical or highly similar to the first conversation information, it is determined that the first database fails to be matched with the above first conversation information.

In addition, in an actual application process, the above first database can be a database pre-stored in the storage space of the electronic device, and can further be a shared database of third-party software or websites, which is not specifically limited herein.

In some embodiments of the present application, after the above S104, the method for processing conversation information specifically comprises the following S110 and S112:
S110, in the case of a matching failure, inputting the first conversation information into the first model, wherein the first model outputs third reply information based on the first conversation information; and
S112, displaying the third reply information.

In the embodiment, after the electronic device receives the first conversation information input by the user, and, in response to the first input of the user, compares and matches the above first conversation information with the professional knowledge base (i.e., the first database) corresponding to the professional field to which the first conversation information belongs, in the case that the first database fails to be matched with the first conversation information input by the user, the first conversation information input by the user is directly input into the above intelligent dialogue model, i.e., the first model, to directly answer the first conversation information input by the user through the first model to obtain the third reply information generated by the first model, and output and display the third reply information to the user. In this way, in the case that the first conversation information fails to be matched with the professional knowledge base corresponding to the professional field to which it belongs, a fallback answer is provided to the first conversation information through the intelligent dialogue model, which ensures the effective response rate to the user's question.

Wherein, the output mode of the above first model is a streaming output mode, to ensure the real-time feedback of the results of question-answering and improve the effect of question-answering.

In some embodiments of the present application, the first database comprises a plurality of conversation information entries, and on the above basis, the step of matching the first conversation information in the first database specifically comprises the following S104a to S104d:
S104a, performing encoding processing on the first conversation information;
S104b, performing similarity matching between the first database and the encoded first conversation information;
S104c, determining that the first conversation information successfully matches the first database in the case that there is conversation information semantically identical to the first conversation information in the first database; and
S104d, determining that the first conversation information fails to be matched with the first database in the case that there is not any conversation information in the first database that is semantically identical to the first conversation information.

In the embodiment, after the electronic device receives the first conversation information input by the user, the electronic device will further perform encoding processing on the first conversation information input by the user, and then performs semantic similarity matching between the first database and the encoded first conversation information. Furthermore, the first database stores a plurality of sets of conversation information and reply information corresponding to the professional field to which the first conversation information belongs. On the above basis, in the case that there is conversation information in the first database that is semantically identical or highly similar to the first conversation information, the electronic device determines that the first database successfully matches the first conversation information, and inputs the second conversation information and the first reply information in the first database corresponding to the above first conversation information into the intelligent dialogue model, i.e., the first model, to display the easy-to-understand second reply information to the user after the highly professional first reply information is optimized through the first model. In the case that there is not any conversation information in the first database that is semantically identical or highly similar to the first conversation information, the electronic device determines that the first database fails to be matched with the first conversation information, and inputs the first conversation information input by the user into the above intelligent dialogue model, i.e., the first model, to directly answer the first conversation information input by the user through the first model and display the corresponding third reply information to the user. In this way, the accuracy of the result of the similarity matching between the first database and the first conversation information is ensured, to ensure the accuracy of the results of subsequent intelligent question-answering.

Wherein, in the process of encoding the first conversation information input by the user, cosine encoding processing or vector encoding processing can specifically be performed on the above first conversation information to obtain corresponding first encoded information. In an actual application process, those skilled in the art can select the specific method for the above encoding processing based on actual circumstances, which is not specifically limited herein.

Furthermore, in the process of performing semantic similarity matching between the above first database and the encoded first conversation information, similarity matching algorithms based on Euclidean distance, cosine distance, and deep learning models such as LSTM (Long Short-Term Memory) and BERT (Bidirectional Encoder Representations from Transformers) can be specifically adopted. In an actual application process, those skilled in the art can select the specific type of the above similarity matching algorithm based on actual circumstances, which is not specifically limited herein.

Furthermore, the above encoding processing method corresponds to the similarity matching algorithm to ensure the accuracy of the result of similarity matching.

Furthermore, the above first conversation information can specifically be text information or voice information.

On the above basis, in the process that the electronic device performs semantic similarity matching between the above first database and the encoded first conversation information, in the case that the above first conversation information is the text information, the electronic device directly performs semantic similarity matching between the first database and the first conversation information based on the text information. Whereas in the case that the above first conversation information is the voice information, the electronic device first converts the voice information into the text information, and then performs semantic similarity matching between the first database and the first conversation information based on the text information.

In some embodiments of the present application, before the aboveS104a, the method for processing conversation information further comprises the following S118:
S118, performing preprocessing on the first conversation information to obtain the preprocessed first conversation information;
wherein, the preprocessing comprises at least one of the following: filtering out noise information in the first conversation information, and extracting useful features from the first conversation information.

In the embodiment, before the electronic device performs encoding processing on the first conversation information input by the user, the electronic device further preprocesses the first conversation information input by the user to clean the first conversation information, eliminate interference information in the first conversation information, and extract key feature information from the first conversation information, to obtain the first conversation information with accurate semantics. In this way, the accuracy of the first conversation information involved in similarity matching is ensured, which in turn ensures the accuracy of the result of the similarity matching between the first database and the first conversation information and ensures the accuracy of the result of the subsequent intelligent question-answering.

Wherein, in an actual application process, the above preprocessing can specifically comprise: extracting useful features from the first conversation information to extract and obtain key feature information from the first conversation information.

Furthermore, in an actual application process, the above preprocessing can further specifically comprise filtering out noise information from the first conversation information to remove interference information in the first conversation information.

In an actual application process, those skilled in the art can select the specific method for the above preprocessing based on actual circumstances, which is not specifically limited herein.

In some embodiments of the present application, prior to the S104a, the method for processing conversation information can further specifically comprise the following S120 and S122; on this basis, the S108 can specifically comprise the following S108a:
S120,in case that the language types of the first database and the first conversation information are different, inputting the first conversation information into the first model;
S122,converting the language type of the first conversation information by the first model, and the language types of the first database and the first conversation information are the same;
S108a: displaying the second reply information based on the language type of the first conversation information.

In the embodiment, after the electronic device receives the first conversation information input by the user and before it performs encoding processing on the above first conversation information, the electronic device will further compare the language types of the first database and the above first conversation information. On the above basis, in the case that the language types of the first database and the above first conversation information are the same, the electronic device directly answers the user's question based on the matching result between the first conversation information input by the user and the above first database. Whereas in the case that the language types of the first database and the above first conversation information are different, the electronic device outputs the first conversation information input by the user to the above first model, to convert the language type of the above first conversation information by the first model, obtain the first conversation information whose language type is the same as that of the above first database, and then answer the user's question based on the matching result between the first conversation information obtained based on conversion and the above first database. Wherein, in the case that the language types of the first database and the above first conversation information are different, after the electronic device answers the above first conversation information, it outputs and displays the second reply information of the same language type based on the language type of the first conversation information input by the user, to ensure the consistency of the language types of the input information and output information and facilitate user understanding. In this way, with the translation capability of the first model, a multilingual intelligent question-answering dialogue is realized, which expands the application scope of intelligent question-answering and ensures the effect of question-answering

In some embodiments of the present application, the encoding processing comprises at least one of the following: cosine encoding processing and vector encoding processing.

In the embodiment, during the process that the electronic device performs encoding processing on the first conversation information input by the user, cosine encoding processing or vector encoding processing can be specifically performed on the above first conversation information to obtain corresponding first encoded information.

In an actual application process, those skilled in the art can select specific methods of the above encoding processing based on actual situations, which are not specifically limited herein.

In some embodiments of the present application, the matching algorithms for similarity matching comprise at least one of the following: a similarity matching algorithm based on a deep learning model, a similarity matching algorithm based on cosine distance, and a similarity matching algorithm based on Euclidean distance.

In the embodiment, during the process that the electronic device performs semantic similarity matching between the above first database and the first conversation information input by the user, the similarity matching algorithm based on a deep learning model such as LSTM and BERT models, the similarity matching algorithm based on cosine distance, or the similarity matching algorithm based on Euclidean distance can be specifically adopted.

In an actual application process, those skilled in the art can select the specific type of the above similarity matching algorithm based on actual situations, which are not specifically limited herein.

Furthermore, the above similarity matching algorithm corresponds to the encoding processing method to ensure the accuracy of the result of similarity matching.

In some embodiments of the present application, after the aboveS108, the method for processing conversation information can further specifically comprise the following S126 and S128:
S126, obtaining feedback information of a user;
S128, updating database information of the first database based on the feedback information;
wherein, the feedback information is associated with the second reply information.

In the embodiment, after the electronic device responds to the first conversation information input by the user, the user can provide evaluation feedback on the second reply information output by the electronic device through a touch input in the question-answering interface of the electronic device. On the above basis, the electronic device receives and responds to the user's touch input on the question-answering interface, and optimizes the database content of the first database based on the feedback information input by the user in the question-answering interface, that is, updating the professional information data stored in the first database. In this way, the database content of the first database is updated and optimized based on the user's evaluation of the second reply information, which expands the data scope of the first database and to further improve the accuracy of subsequent responses to the user's questions.

Specifically, after the electronic device responds to the first conversation information input by the user, the electronic device can display a target control in the question-answering interface, and the target control is configured to evaluate the second reply information output by the electronic device. On the above basis, the electronic device can receive and respond to the user's touch input on the target control, and update the database content of the first database based on the evaluation information fed back by the user to the electronic device, to optimize the database content in the first database corresponding to the first conversation information, or add database content associated with the first conversation information to the first database.

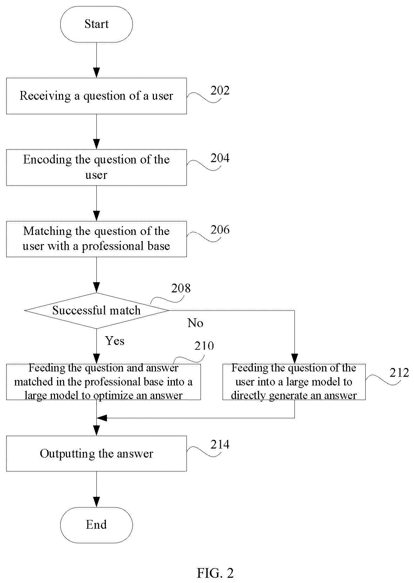

In some embodiments of the present application, as shown in FIG. 2, the method for processing conversation information specifically comprises the following S202 to S214:
S202, receiving a question of a user;
S204, encoding the question of the user;
S206, matching the question of the user with a professional base;
S208, determining whether the matching result is a successful match; if it is yes, executing S210; if it is not, executing S212;
S210, feeding the matched question and answer in the professional base into a large model to optimize the answer;
S212, feeding the question of the user into the large model to generate an answer; and
S214, outputting the answer;
wherein, the large model in S210 and S212 is equivalent to the above first model; the professional base in S206 and S210 is equivalent to the above first database; and the matched question and answer in the professional database in S210 are equivalent to the above second conversation information and first reply information.

In the embodiment, specifically, after the question of the user is input, the electronic device first encodes the question of the user. Wherein, before encoding, it is necessary to perform a cleaning operation on the question of the user, which can specifically comprise steps such as selecting useful features and removing noise. Furthermore, the encoding methods for the question of the user comprise, but are not limited to, vector encoding, cosine encoding, etc. On the above basis, semantic similarity matching is performed between the encoded question of the user and the professional base. Wherein, the similarity matching algorithms comprise a matching algorithm based on Euclidean distance, a matching algorithm based on cosine distance, a matching algorithm of LSTM or BERT based on deep learning, etc., and the similarity matching algorithm corresponds to the above encoding method. Furthermore, if the question of the user successfully matches the professional base, the question and answer matching with each other in the professional base are input together into a ChatGPT-like large model and are optimized by the large model, and then an answer which can be understood by the user more easily is output. If no question and answer are matched in the professional base, i.e., the matching between the question of the user and the professional base fails, the question of user is directly input into the ChatGPT-like large model, and the large model generates corresponding answer directly, and the answer generated by the large model is output to ensure that there is a feedback result to the question of the user. Wherein, it should be noted that the output setting of the large model should be adjusted to streaming output to ensure the real-time feedback of the result.

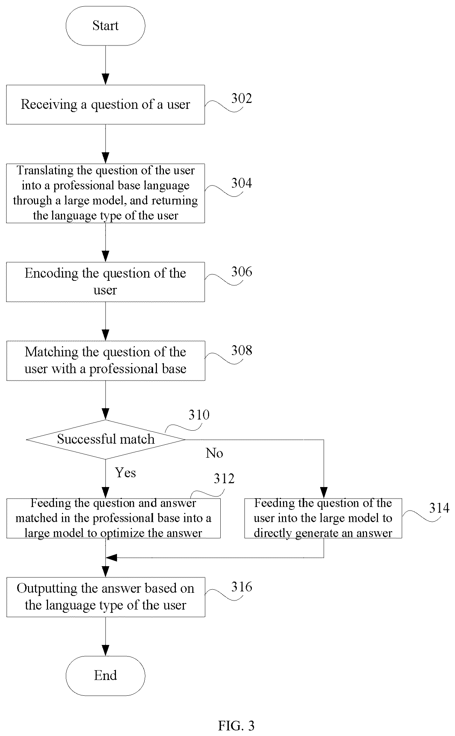

In some embodiments of the present application, as shown in FIG. 3, the method for processing conversation information specifically comprises the following S302 to S316:
S302, receiving a question of a user;
S304, translating the question of the user into a professional base language through a large model, and returning the language type of the user;
S306, encoding the question of the user;
S308, matching the question of the user with a professional base;
S308, determining whether the matching result is a successful match; if it is yes, executingS312; if it is not, executingS314;
S312, feeding the matched question and answer in the professional base into a large model to optimize the answer;
S314, feeding the question of the user into the large model to generate an answer; and
S316, outputting the answer based on the language type of the user.
wherein, the large model in S304, S312 and S314 is equivalent to the above first model; the professional base in S304, S308 and S312 is equivalent to the above first database; and the matched question and answer in the professional database in S312 are equivalent to the above second conversation information and first reply information.

In the embodiment, a multilingual question-answering dialogue is realized by the translation capability of the large model. Specifically, after the question of the user is input, the electronic device inputs the question of the user into the ChatGPT-like large model, and the question of the user is translated into a professional base language type through the ChatGPT-like large model, and meanwhile, the language type of the user is returned at the same time. On the above basis, the electronic device then performs a series of operations such as encoding and similarity matching on the translated question of the user to obtain a corresponding answer. Furthermore, when the answer to the question is output, the answer having the same language type shall be output based on the language type of the question of the user, to ensure the consistency of the language types of the input information and output information during the question-answering process.

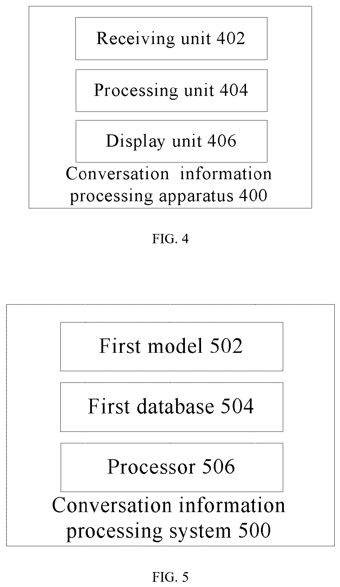

In an embodiment of the present application, a conversation information processing apparatus is further provided. As shown in FIG. 4, FIG. 4 is a block diagram of the structure of the conversation information processing apparatus 400 according to the embodiment of the present application. The conversation information processing apparatus 400 can specifically comprise a receiving unit 402, a processing unit 404 and a display unit 406 in the following.
a receiving unit 402, configured to receive a first input of a user, wherein the first input comprises first conversation information;
a processing unit 404, configured to perform matching on the first conversation information in a first database in response to the first input; and in the case of a successful matching, input first reply information and second conversation information corresponding to the first conversation information into a first model, wherein the first model outputs second reply information based on the first reply information and the second conversation information;
a display unit 406, configured to display the second reply information;
wherein the first model is an intelligent dialogue model, and the first database is a professional knowledge base corresponding to a professional field to which the first conversation information belongs.

The conversation information processing apparatus 400 provided in the embodiment of the present application is configured to answer conversation information raised by users in professional fields such as the cooking field, and feed back accurate and easy-to-understand reply information to users, which can improve the correctness of the result of intelligent question-answering and enhance the humanized characteristics of intelligent question-answering.

Furthermore, the conversation information processing apparatus 400 provided in the present application is specifically applicable to the electronic device with data analyzing and data processing functions.

In an actual application processing, the electronic device can specifically be a smart device such as a smartphone, a smart watch, a tablet computer and a laptop, which are not specifically limited herein.

Specifically, the conversation information processing apparatus 400 provided in the present application comprises the receiving unit 402 and the processing unit 404. In the case that a user asks a question corresponding to a professional field such as the cooking field via an electronic device, the user can directly input the first conversation information through the first input for the electronic device. The receiving unit 402 receives the first input of the user, and the processing unit 404, in response to the first input, obtains the first conversation information input by the user and compares and matches the first conversation information with the professional knowledge base (i.e., the first database) in the professional field to which the first conversation information belongs. Wherein, the first database stores a plurality of sets of conversation information and reply information in the professional field to which the first conversation information belongs. On the above basis, in the case that the first database successfully matches the first conversation information input by the user, the processing unit 404 obtains the first reply information and the second conversation information in the first database corresponding to the first conversation information, and the first reply information is highly professional. Furthermore, the processing unit 404 inputs the obtained first reply information and second conversation information into an intelligent dialogue model, i.e., the first model, to optimize the highly professional first reply information through the first model. Specifically, the first reply information and the second conversation information are integrated through the first model, and the first reply information is polished and revised based on the information obtained through integration, to obtain the second reply information that is less professional and easy for the user to understand, and the display unit 406 displays the second reply information to the user. In this way, by combining the professional knowledge base corresponding to the professional field and the intelligent dialogue model, the user's questions are answered intelligently, and then this can ensure the professionalism of the result of question-answering results and thus ensure the correctness of the results of question-answering, and meanwhile facilitate user understanding, enhance the humanized characteristics of the results of question-answering, and ensure the effect of question-answering.

Wherein, the above first input can specifically be a touch input performed by the user on the question-answering interface of the electronic device. The touch input can specifically comprise a single-click input, double-click input, swipe input, input along a preset trajectory, etc. Those skilled in the art can set the specific form of the above first input based on actual circumstances, which is not specifically limited herein.

In an actual application process, an information input control can be displayed in the above question-answering interface. The above first input can specifically be the touch input performed by the user on the information input control. In response to the touch input, the processing unit 404 outputs corresponding second reply information for the first conversation information submitted by the user.

Wherein, the above information input control can specifically be a text input control or a voice input control. Furthermore, the above first conversation information can specifically be text information or voice information, which is not specifically limited herein.

On the above basis, in the process that the processing unit 404 answers the first conversation information input by the user and thus outputs the second reply information, in the case that the above first conversation information is the text information, the processing unit 404 directly answers the first conversation information input by the user based on the text information. Whereas in the case that the above first conversation information is the voice information, the processing unit 404 converts the voice information into text information first, and then answers the first conversation information input by the user based on the text information.

Furthermore, a plurality of sets of conversation information and reply information in the professional field to which the above first conversation information belongs are stored in the first database. In the process that the processing unit 404 compares and matches the first database with the first conversation information input by the user, and specifically, the processing unit 404 performs a semantic similarity comparison between the first conversation information input by the user and the plurality of conversation information entries stored in the first database. On this basis, in the case that there is conversation information in the first database that is semantically identical or highly similar to the first conversation information, the processing unit 404 determines that the first database successfully matches with the above first conversation information; whereas in the case that there is not any conversation information in the first database that is semantically identical or highly similar to the first conversation information, the processing nit 404 determines that the first database fails to be matched with the above first conversation information.

In addition, in an actual application process, the above first database can be a database pre-stored in the storage space of the electronic device, and can further be a shared database of third-party software or websites, which is not specifically limited herein.

In some embodiments of the present application, the processing unit 404 is further configured to input the first conversation information into the first model in the case of a matching failure, and the first model outputs third reply information based on the first conversation information; and the display unit 406 is further configured to display the third reply information.

In some embodiments of the present application, the first database comprises a plurality of conversation information entries, and on the above basis, the processing unit 404 is specifically configured to: perform encoding processing on the first conversation information; perform similarity matching between the first database and the encoded first conversation information; determine that the first conversation information successfully matches the first database in the case that there is conversation information semantically identical to the first conversation information in the first database; and determine that the first conversation information fails to be matched with the first database in the case that there is not any conversation information in the first database that is semantically identical to the first conversation information.

In some embodiments, the processing unit 404 is further configured to perform preprocessing on the first conversation information to obtain the preprocessed first conversation information; wherein the preprocessing comprises at least one of the following: filtering out noise information in the first conversation information, and extracting useful features from the first conversation information.

In some embodiments of the present application, the processing unit 404 is further configured to: input the first conversation information into the first model in the case that the language type of the first database is different from that of the first conversation information; convert the language type of the first conversation information by the first model, and the language type of the first database is the same as that of the first conversation information. The display unit 406 is specifically configured to display the second reply information based on the language type of the first conversation information.

In some embodiments of the present application, the encoding processing comprises at least one of the following: cosine encoding processing and vector encoding processing.

In some embodiments of the present application, the matching algorithms for similarity matching comprise at least one of the following: a similarity matching algorithm based on a deep learning model, a similarity matching algorithm based on cosine distance, and a similarity matching algorithm based on Euclidean distance.

In an embodiment of the present application, a conversation information processing system is provided. As shown in FIG. 5, FIG. 5 shows a block diagram of the structure of a conversation information processing system 500 according to an embodiment of the present application. Wherein, the conversation information processing system 500 comprises a first model 502, a first database 504 and a processor 506.

Wherein, the first model 502 is an intelligent dialogue model, the first database 504 is a professional knowledge base, and the first database 504 stores a plurality of sets of conversation information and reply information corresponding to a professional field such as the cooking field.

Furthermore, the processor 506 is configured to perform the steps of the method for processing conversation information according to any one of the above embodiments. Therefore, the conversation information processing system 500 provided in the third aspect of the present application has all the beneficial effects of the method for processing conversation information according to any one of the embodiments in the first aspect, which will not be repeated here.

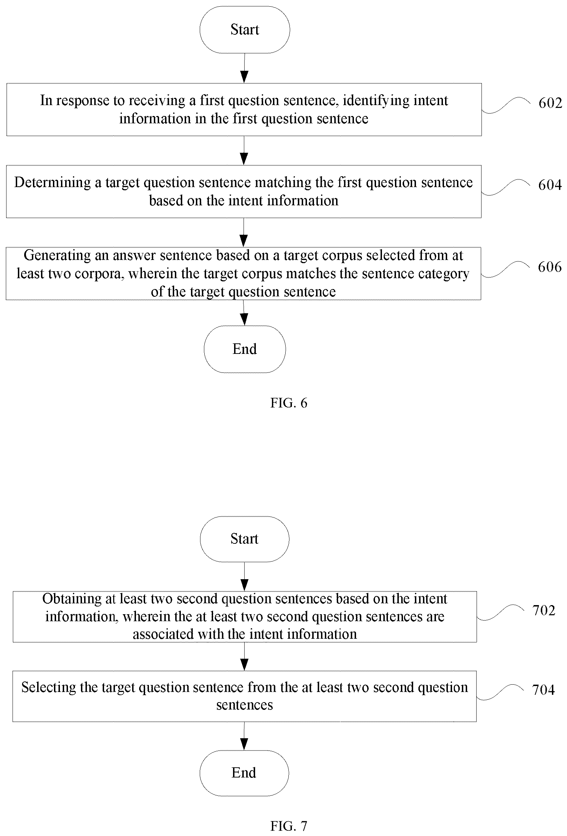

In an embodiment of the present application, as shown in FIG. 6, a sentence generation method is provided, comprising:
S602, in response to receiving a first question sentence, identifying intent information in the first question sentence;
S604, determining a target question sentence matching the first question sentence based on the intent information; and
S606, generating an answer sentence based on a target corpus selected from at least two corpora, wherein the target corpus matches the sentence category of the target question sentence.

The embodiment of the present application provides a sentence generation method applied to a question-answering system, and the question-answering system can answer the first question sentence input by a user into the question-answering system by the sentence generation method. Through intent Identification, the question-answering system determines the target question sentence matching the first question sentence, find a corresponding target corpus based on the target question sentence, and generate the answer sentence through a target corpus data in the target corpus. By first performing intent Identification and classification on the first question sentence, the present application enables the distribution of different types of questions, i.e., generating corresponding answer sentences through the target corpus data in different target corpora, and can answer different categories of question sentences only through one intent Identification, which reduces the waste of computing power and improves the efficiency of generating the answer sentence.

In the embodiment, the question-answering system comprises an intent matching module, the intent information of the first question sentence can be identified through the intent matching module, and the corresponding target question sentence of the first question sentence can be found based on the intent information. It is found that the target question sentence is a preset question sentence, and the semantics of the target question sentence is similar or identical to that of the first question sentence. That is, through the identified intent information, the first question sentence output by the user can be converted into a standardized target question sentence.

Exemplarily, the first question sentence is "How long should a chiffon cake be baked" or "How long does it take to make a chiffon cake", and it can be determined through the identifyd semantic information that the target question sentence corresponding to the first question sentence is "Baking time of chiffon cake".

Exemplarily, the first question sentence is "Why does the chiffon cake collapse" or "What to do if the surface of the chiffon cake sinks", and it can be determined through the identifyd semantic information that the target question sentence corresponding to the first question sentence is "Why does the baked chiffon cake collapse".

In the embodiment, the question-answering system can find a matching target corpus among different corpora based on the sentence category. The sentence categories comprise, but are not limited to, a sentence of the structured question category and a sentence of the preset question category. By intent Identification, the question-answering system determines the target question sentence and the corresponding sentence category of the target question sentence, and thus can accurately select the corresponding target corpus, and Identification modules adaptable to different sentence categories need not be set in the question-answering system, which reduces the computing power consumption of the question-answering system and further improves the processing efficiency.

Wherein, the sentence of the structured question category typically refers to a simple real-time question, which is stored in a structured manner, for example, ingredients and their quantities required in a recipe, cooking time, cooking temperature, cooking steps, etc. The sentence of the preset question category typically refers to a complex question, which is generally stored in a question-answer corresponding form, that is, a corresponding standard answer is found through the sentence of the preset question category and then output as the answer sentence.

In the embodiment of the present application, after receiving the first question sentence, the question-answering system determines the standardized target question sentence corresponding to the first question sentence through intent Identification, find the corresponding target corpus based on the sentence category of the target question sentence, and generate the answer sentence through the target corpus data in the target corpus, and thus it is unnecessary to repeatedly process the first question sentence based on different sentence categories, which reduces the energy consumption of the question-answering system and improves the efficiency of the question-answering system in outputting the answer sentence.

In some embodiments of the present application, as shown in FIG. 7, determining the target question sentence matching the first question sentence based on the intent information comprises:
S702, obtaining at least two second question sentences based on the intent information, wherein the at least two second question sentences are associated with the intent information; and
S704, selecting the target question sentence from the at least two second question sentences.

The embodiments provide the intent information obtained through intent Identification, and can obtain a plurality of the second question sentences semantically similar to the first question sentence, and then the target question sentence matching the first question sentence is obtained by selecting the plurality of the second question sentences, which improves the accuracy of the target question sentence obtained through selecting.

In the embodiment of the present application, the intent matching module is disposed in the question-answering system. The intent matching module can preliminarily recall candidate similar second question sentences. After the plurality of the second question sentences are obtained, a closest target question sentence can be obtained by comparing the plurality of the second question sentences with the first question sentence respectively.

Exemplarily, the intent matching module in the question-answering system adopts a method based on Elastic Search (ES), and a Best Matching 25 (BM25) text similarity calculation formula built in the question-answering system is configured to obtain a plurality of second question sentences that are semantically closest to the first question sentence, thus forming a candidate question set, and the target question sentence is selected from the candidate question set.

In the embodiment of the present application, the question-answering system can perform two-level selecting based on the intent information, that is, a plurality of second question sentences with similar semantics are found first, and then the target question sentence semantically matching the first question sentence are selected from the plurality of the second question sentences, which improves the accuracy of obtaining the matching target question sentence.

In some embodiments of the present application, selecting the target question sentence from at least two second question sentences comprises: obtaining the semantic similarity between the first question sentence and each of the at least two second question sentences; and selecting the target question sentence from the at least two second question sentences based on the semantic similarity.

The embodiments provide a process of selecting the target question sentence from a plurality of second question sentences based on the semantic similarity.

In the embodiment of the present application, the semantic similarity between the first question sentence and each second question sentence is calculated respectively. The plurality of second question sentences are sorted based on the semantic similarity, and the second question sentence with the highest semantic similarity is taken as the target question sentence, which improves the matching degree between the target question sentence obtained through selecting and the first question sentence.

Wherein, after obtaining the plurality of the second question sentences, the question-answering system calculates the semantic similarity between the plurality of the second question sentences and the first question sentence, and then selects the second question sentence with the highest semantic similarity value as the matching target question sentence.

In the embodiment of the present application, after the question-answering system finds the plurality of the second question sentences through the intent information, it can accurately calculate a plurality of semantic similarities between the plurality of the second question sentences and the first question sentence, and find the target question sentence from the plurality of the second question sentences based on the semantic similarities, to further improve the matching degree between the target question sentence and the first question sentence.

In some embodiments of the present application, obtaining the semantic similarity between the first question sentence and each of the at least two second question sentences comprises: obtaining a first semantic vector of the first question sentence and a second semantic vector of each second question sentence; and calculating the semantic similarity based on the first semantic vector and the second semantic vector.

The embodiments provide a solution of converting a plurality of second question sentences and the first question sentence into semantic vectors, and calculating the semantic similarity between each second question sentence and the first question sentence based on the semantic vectors.

In the embodiment of the present application, the first semantic vector corresponding to the first question sentence and the second semantic vectors corresponding to the second question sentences are obtained respectively, the number of the second semantic vectors is the same as that of the second question sentences, and the second semantic vectors are in one-to-one correspondence with the second question sentences. By calculating the similarity between the first semantic vector and the second semantic vectors respectively, a plurality of semantic similarities can be obtained, and the semantic similarities are in one-to-one correspondence with the second semantic vectors.

Exemplarily, all the obtained second question sentences and the first question sentence are converted into high-dimensional semantic vectors in the semantic space, and the first question sentence corresponds to the first semantic vector and the second question sentence corresponds to the second semantic vector. By calculating the semantic similarity between the first semantic vector and each second semantic vector, the second question sentence corresponding to the second semantic vector with the highest semantic similarity is taken as the target question sentence.

In the embodiment of the present application, by converting both the first question sentence and the second question sentences into high-dimensional semantic vectors, and by the similarity calculation of the high-dimensional semantic vectors, the corresponding target question sentence is selected, which can improve the accuracy of determining the target question sentence.

In some embodiments of the present application, obtaining the semantic similarity between the first question sentence and each of the at least two second question sentences comprises: inputting the first question sentence and each second question sentence into a pre-trained model to determine the semantic similarity.

The embodiments provide a process of calculating a plurality of semantic similarities between a plurality of second question sentences and the first question sentence through the trained model by inputting the first question sentence and the second question sentences into the pre-trained model.

Exemplarily, after obtaining the plurality of the second question sentences, the question-answering system uses a large-scale pre-trained model to calculate the semantic similarity between the plurality of the second question sentences and the first question sentence respectively, and the pre-trained model is a model after fine adjustment to the database using a synonym sentence. For example, the plurality of second question sentences comprise Question 1, Question 2, Question 3, Question N, etc., and the plurality of the semantic similarities corresponding to the plurality of second question sentences are sim1, sim2, sim3, simN, etc. Then, the second question sentence with the highest semantic similarity value is selected as the matching target question sentence.

In the embodiment of the present application, through providing the pre-trained model in the question-answering system, in the case of obtaining a plurality of second question sentences, the plurality of second question sentences and the first question sentence are input into the pre-trained model, and then a plurality of semantic similarities between the plurality of second question sentences and the first question sentence can be calculated accurately.

In some embodiments of the present application, before generating an answer sentence based on the target corpus selected from at least two corpora, the embodiments comprise: selecting the target corpus among the at least two corpora based on identification information in the target question sentence, wherein the identification information corresponds to the sentence category; wherein, the sentence categories comprise at least one of a preset question category and a structured question category.

The embodiments provide that the question-answering system can select the target corpus from at least two corpora based on the identification information corresponding to the target question sentence, that is, it is ensured that the question-answering system determines the matching target corpus after determining the target question sentence corresponding to the first question sentence.

In the embodiment of the present application, the target question sentence is a question sentence preset in the question-answering system, and each target question sentence is correspondingly disposed with relevant identification information. After the question-answering system determines the target question sentence corresponding to the first question sentence, it determines the sentence category of the target question sentence by reading the identification information of the target question sentence, to find the corresponding target corpus.

In the embodiment of the present application, the number of corpora disposed in the question-answering system matches the number of sentence categories and the number of identification information, and the corpora, sentence categories and identification information are in one-to-one correspondence.

Exemplarily, two corpora are disposed in the question-answering system, and then there are two sentence categories and there are further two identification information entries.

In the embodiment of the present application, the sentence categories comprise at least one of the preset question categories and the structured question category. Sentences of the structured question category are typically simple real-time questions, which are stored in a structured manner. Sentences of the preset question category are typically complex questions, which are generally stored in a question-answer corresponding form, that is, corresponding standard answers are found through the sentences of the preset question category and then output as answer sentences.

Exemplarily, a sentence of the structured question category can be "What is the cooking temperature of a chiffon cake", and a sentence of the preset question category can be "Why does a chiffon cake collapse".

In the embodiment of the present application, by arranging corresponding identification information in the target question sentences prestored in the question-answering system, it is ensured that after the question-answering system obtains the target question sentence matching the first question sentence, it can quickly determine the sentence category corresponding to the target question sentence, and determine the target corpus among a plurality of corpora accordingly.

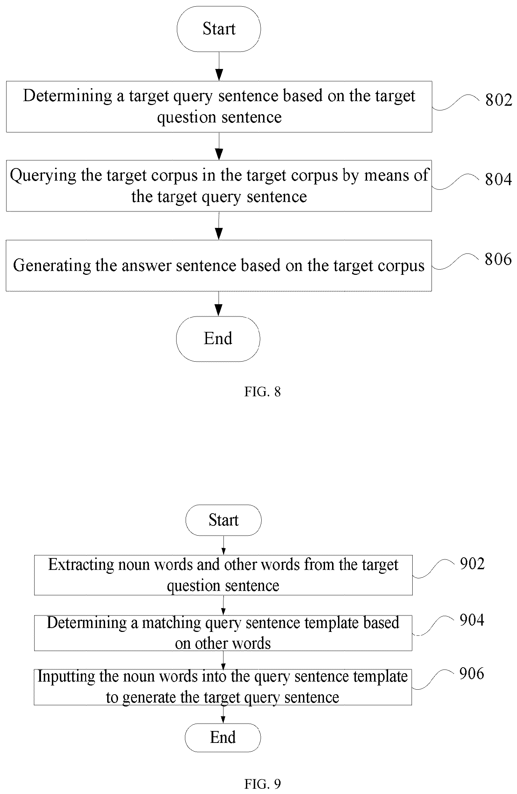

In some embodiments of the present application, as shown in FIG. 8, the sentence category is the structured question category; generating the answer sentence based on the target corpus among the at least two corpora comprises:
S802, determining a target query sentence based on the target question sentence;
S804, querying the target corpus data in the target corpus by the target query sentence; and
S806, generating the answer sentence based on the target corpus data.

The embodiments provide a specific process for the question-answering system to generate an answer sentence in the case that the target question sentence is a sentence of the structured question category.

In the embodiment of the present application, when the sentence category is a structured question, the target query sentence matching the target question sentence is retrieved. The target query sentence is configured to search for the corresponding target corpus data in the target corpus corresponding to the structured question category, and after the corresponding target corpus data is found, a corresponding answer sentence is generated through the target corpus data.

Wherein, the target query sentence is a structured query code.

Exemplarily, the target query sentence can be "MATCH (a1:Recipe{recipe_name:"Chiffon Cake"})-[r:contain]->(a2:Ingredient{ingredient_name:"White Granulated Sugar"}) RETURN contain.weight". The target question sentence corresponding to this target query sentence is "The amount of white granulated sugar in chiffon cake".

Specifically, when the target question sentence is a sentence of the structured question category, the template of the corresponding target query sentence can be found through the target question sentence. By extracting entity nouns from the target question sentence and inserting the entity nouns into the template, the target query sentence can be obtained. The target corpus data can be found from the target corpus through the target query sentence, and the answer sentence can be output based on the target corpus data.

Exemplarily, when the target question sentence is "The amount of white granulated sugar in chiffon cake", the target corpus data found through the target query sentence is "60 grams", and then the answer sentence generated based on the target corpus data is "60 grams of white granulated sugar are needed to make a chiffon cake".

In the embodiment of the present application, when the target question sentence is the sentence of the structured question category, the question-answering system can first determine the corresponding target query sentence based on the target question sentence, then find the target corpus data from the corresponding target corpus through the target query sentence, and further generate the corresponding answer sentence based on the target corpus data, to ensure the matching degree between the answer sentence and the target question sentence.

In some embodiments of the present application, as shown in FIG. 9, determining the target query sentence based on the target question sentence comprises:
S902, extracting noun words and the remaining words from the target question sentence;
S904, determining a matching query sentence template based on the remaining words; and
S906, inputting the noun words into the query sentence template to generate the target query sentence.

The embodiments provide a process of searching for the query sentence template of the target query sentence and determining the target query sentence based on the query sentence template when the target question sentence is the sentence of the structured question category.

In the embodiment of the present application, the target query sentences corresponding to the sentences of the structured question category are further structured query sentences. That is, different target query sentences correspond to different query sentence templates. The query sentence template can be determined by parsing the remaining words in the target question sentence, and then the noun words in the target question sentence are inserted into the query sentence template, to determine the target query sentence.

Wherein, the noun words refer to the entity words in the target question sentence, and the remaining words refer to non-entity words in a target sentence, i.e., all words except the noun words.

Exemplarily, the target question sentence is "The amount of white granulated sugar in chiffon cake", and the noun words in the target question sentence are "chiffon cake" and "white granulated sugar". The remaining words are "The amount of [ingredient name] in [recipe name]".

In the embodiment of the present application, the question-answering system can find the query sentence template matching the target question sentence by performing semantic analysis on the remaining words.

Exemplarily, the query sentence template is "MATCH (a1:Recipe{recipe_name:"[Recipe Name]"})-[r:contain]->(a2:Ingredient{ingredient_name:"[Ingredient Name]"}) RETURN contain.weight", and the remaining words corresponding to this query sentence template are "The amount of [Ingredient Name] in [Recipe Name]".

In the embodiment of the present application, after the corresponding query sentence template is determined, the noun words in the target question sentence are inserted into the query sentence template to obtain the corresponding target query sentence.

Exemplarily, the query sentence template is "MATCH (a1:Recipe{recipe_name:"[Recipe Name]"})-[r:contain]->(a2:Ingredient{ingredient_name:"[Ingredient Name]"}) RETURN contain.weight", the noun words are "chiffon cake" and "white granulated sugar" respectively, and then the target query sentence is "MATCH (a1:Recipe{recipe_name:"chiffon cake"})-[r:contain]->(a2:Ingredient{ingredient_name:"white granulated sugar"}) RETURN contain.weight".

In the embodiment of the present application, by parsing the target question sentence of the structured question category, the noun words and the remaining words contained therein can be obtained, the corresponding query sentence template is found through the remaining words, and then the noun words are inserted into the query sentence template to obtain the corresponding target query sentence, thus improving the accuracy of obtaining the target query sentence, further improving the accuracy of the found target corpus data, and to enhance the matching degree between the generated answer sentence and the first question sentence.

In some embodiments of the present application, the sentence category is the preset question category; generating the answer sentence based on the target corpus among the at least two corpora comprises:

retrieving the answer sentence based on the target question sentence and the preset mapping relationship, wherein the preset mapping relationship represents a correspondence between the target question sentence and the answer sentence in the target corpus.

The embodiments provide a specific process for the question-answering system to generate the answer sentence in the case that the target question sentence is the sentence of the preset question category.

In the embodiment of the present application, the question-answering system stores the answer sentence corresponding to the target question sentence of the preset question category, as well as the preset mapping relationship between the answer sentence and the target question sentence of the preset question category.

Wherein, the target corpus corresponding to the target question sentence of the preset question category stores the preset mapping relationship between the answer sentence and the target question sentence of the preset question category, as well as the corresponding answer sentence. After the target question sentence of the preset question category is determined, the corresponding answer sentence is found by the preset mapping relationship in the target corpus, and then output.

Exemplarily, the target question sentence is "Why does the chiffon cake collapse", and then the answer sentences found from the target corpus through the preset mapping relationship comprise: 1. The cake was not inverted or cooled in time after baking; 2. The egg whites were not beaten to a stiff peak state.

In the embodiment of the present application, when the target question sentence is the sentence of the preset question category, the corresponding answer sentence can be automatically found from the target corpus through the preset mapping relationship, which ensures the relevance and matching degree between the answer sentence and the first question sentence.

In some embodiments, before identifying the intention information in the first question sentence, the embodiments further comprise: in response to receiving the first question sentence, updating the first question sentence based on the words in a preset vocabulary bank.

The embodiments provide updating the first question sentence through the words in the preset vocabulary bank after receiving the first question sentence, which can improve the accuracy and efficiency of the question-answering system in finding the target question sentence through semantic information.

In the embodiments of the present application, the preset vocabulary bank is a vocabulary pre-stored in the question-answering system. Updating the words in the first question sentence with the words in the preset vocabulary bank can improve the efficiency and accuracy of the question-answering system in semantically identifying the first question sentence.

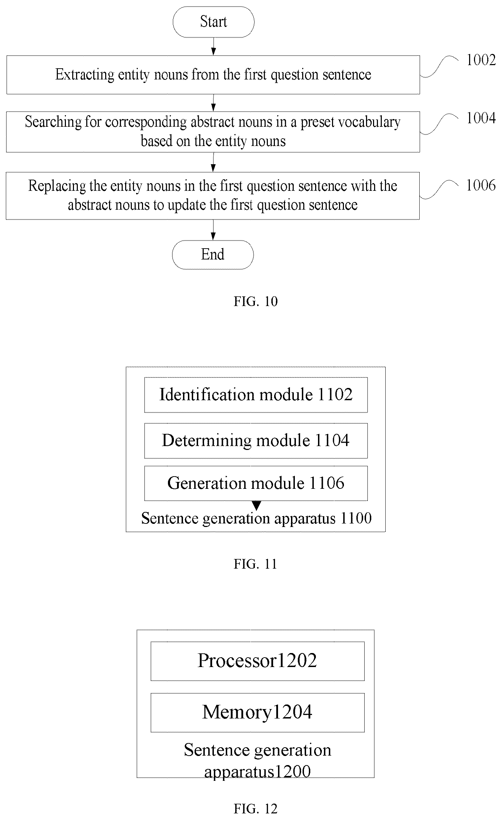

In some embodiments of the present application, as shown in FIG.10, in response to receiving the first question sentence, updating the first question sentence based on the words in the preset vocabulary bank comprises:
S1002, extracting the entity nouns from the first question sentence;
S1004, searching for the corresponding abstract nouns in the preset vocabulary bank based on the entity nouns; and
S1006, replacing the entity nouns in the first question sentence with the abstract nouns to update the first question sentence.

The embodiments provide the specific process of replacing the entity nouns in the first question sentence with the abstract nouns in the preset vocabulary bank.

Specifically, the entity nouns refer to nouns with a relatively narrow reference scope in the first question sentence, while the abstract nouns refer to nouns with a relatively broad reference scope in the preset vocabulary bank. There is a semantic inclusion relationship between the abstract nouns found through the entity nouns.

In the embodiment of the present application, different entity nouns may correspond to the same abstract noun in the preset vocabulary bank.

Exemplarily, the entity nouns in the first question sentence are "chiffon cake", "braised chicken" and "roasted lamb chops", and then the abstract noun found from the preset vocabulary bank is "recipe name".

Exemplarily, the entity nouns in the first question sentence are "white granulated sugar", "chicken" and "lamb chop meat", and then the abstract noun found from the preset vocabulary bank is "ingredient name".

In the embodiment of the present application, by replacing the entity nouns in the first question sentence with the abstract nouns in the preset vocabulary bank after receiving the first question sentence, the computing power required for extracting the intention information for the first question sentence can be reduced, and the efficiency of obtaining the intention information corresponding to the first question sentence can further be improved.

According to an embodiment of the present application, as shown in FIG. 11, a sentence generation apparatus 1100 is further provided, comprising: an identification module 1102 configured to, in response to receiving a first question sentence, identify intention information in a first question sentence; a determining module 1104 configured to determine a target question sentence matching the first question sentence based on the intention information; and a generation module1106 configured to generate an answer sentence based on a target corpus selected from at least two corpora, wherein the target corpus matches the sentence category of the target question sentence.

The embodiment of the present application provides the sentence generation apparatus1100 which is applied to the question-answering system. The question-answering system can answer the first question sentence input by the user into the question-answering system by the sentence generation apparatus 1100. By intention Identification, the question-answering system determines the target question sentence matching the first question sentence, find the corresponding target corpus based on the target question sentence, and generate an answer sentence through the target corpus data in the target corpus. In the present application, intention Identification and classification are first performed on the first question sentence, to realize the distribution of different types of questions, that is, corresponding answer sentences are generated through the target corpus data in different target corpora. Question sentences of different categories can be answered only through one intention Identification, which reduces the waste of computing power and improves the efficiency of generating answer sentences.

In the embodiment, the question-answering system comprises an intention matching module, through which the intention information of the first question sentence can be identifyd, and the target question sentence corresponding to the first question sentence can be found based on the intention information. The found target question sentence is a preset question sentence, and the semantics of the target question sentence is similar to or the same as that of the first question sentence. That is, based on the identifyd intention information, the first question sentence output by the user can be converted into a standardized target question sentence.

In the embodiment, the question-answering system can find a matching target corpus among different corpora based on the sentence category. The sentence categories comprise, but are not limited to, sentences of the structured question category and sentences of the preset question category. The question-answering system determines the target question sentence and the corresponding sentence category of the target question sentence by intention Identification, and then can accurately select the corresponding target corpus, and Identification modules 1102 adaptable to different sentence categories need not be provided in the question-answering system, which reduces the computing power consumption of the question-answering system and further improves the processing efficiency.

Wherein, the sentence of the structured question category typically refers to a simple real-time question, which is stored in a structured manner, for example, ingredients and their quantities required in a recipe, cooking time, cooking temperature, cooking steps, etc. The sentence of the preset question category typically refers to a complex question, which is generally stored in a question-answer corresponding form, that is, a corresponding standard answer is found through the sentence of the preset question category and then output as the answer sentence.

In the embodiment of the present application, after receiving the first question sentence, the question-answering system determines the standardized target question sentence corresponding to the first question sentence through the intention Identification, find the corresponding target corpus based on the sentence category of the target question sentence, and generate the answer sentence through the target corpus data in the target corpus, and thus it is unnecessary to repeatedly process the first question sentence based on different sentence categories, which reduces the energy consumption of the question-answering system and improves the efficiency of the question-answering system in outputting the answer sentence.

In some embodiments of the present application, the sentence generation apparatus 1100 further comprises: an obtainment module configured to obtain at least two second question sentences based on the intention information, wherein the at least two second question sentences are associated with the intention information; and a selecting module configured to select the target question sentence from the at least two second question sentences.

The embodiments provide the intent information obtained through intent Identification, and can obtain a plurality of the second question sentences semantically similar to the first question sentence, and then the target question sentence matching the first question sentence is obtained by selecting the plurality of the second question sentences, which improves the accuracy of the target question sentence obtained through selecting.

In the embodiment of the present application, the intent matching module is disposed in the question-answering system. The intent matching module can preliminarily recall candidate similar second question sentences. After the plurality of the second question sentences are obtained, a closest target question sentence can be obtained by comparing the plurality of the second question sentences with the first question sentence respectively.

In the embodiment of the present application, the question-answering system can perform two-level selecting based on the intent information, that is, a plurality of second question sentences with similar semantics are found first, and then the target question sentence semantically matching the first question sentence are selected from the plurality of the second question sentences, which improves the accuracy of obtaining the matching target question sentence.

In some technical solutions, the obtainment module is specifically configured to obtain the semantic similarity between the first question sentence and each of the at least two second question sentences; and the selecting module is specifically configured to select the target question sentence from the at least two second question sentences based on the semantic similarity.

The embodiments provide a process of selecting the target question sentence from a plurality of second question sentences based on the semantic similarity.

In the embodiment of the present application, the semantic similarity between the first question sentence and each second question sentence is calculated respectively. The plurality of second question sentences are sorted based on the semantic similarity, and the second question sentence with the highest semantic similarity is taken as the target question sentence, which improves the matching degree between the target question sentence obtained through selecting and the first question sentence.

Wherein, after obtaining the plurality of the second question sentences, the question-answering system calculates the semantic similarity between the plurality of the second question sentences and the first question sentence, and then selects the second question sentence with the highest semantic similarity value as the matching target question sentence.

In the embodiment of the present application, after the question-answering system finds the plurality of the second question sentences through the intent information, it can accurately calculate a plurality of semantic similarities between the plurality of the second question sentences and the first question sentence, and find the target question sentence from the plurality of the second question sentences based on the semantic similarities, to further improve the matching degree between the target question sentence and the first question sentence.

In some embodiments of the present application, the obtainment module is further configured to obtain a first semantic vector of the first question sentence and a second semantic vector of each second question sentence; and the sentence generation apparatus 1100 further comprises a calculation module, configured to calculate the semantic similarity based on the first semantic vector and the second semantic vector.

The embodiments provide a solution of converting a plurality of second question sentences and the first question sentence into semantic vectors, and calculating the semantic similarity between each second question sentence and the first question sentence based on the semantic vectors.

In the embodiment of the present application, the first semantic vector corresponding to the first question sentence and the second semantic vectors corresponding to the second question sentences are obtained respectively, the number of the second semantic vectors is the same as that of the second question sentences, and the second semantic vectors are in one-to-one correspondence with the second question sentences. By calculating the similarity between the first semantic vector and the second semantic vectors respectively, a plurality of semantic similarities can be obtained, and the semantic similarities are in one-to-one correspondence with the second semantic vectors.

In the embodiment of the present application, by converting both the first question sentence and the second question sentences into high-dimensional semantic vectors, and by the similarity calculation of the high-dimensional semantic vectors, the corresponding target question sentence is selected, which can improve the accuracy of determining the target question sentence.

In some embodiments of the present application, the sentence generation apparatus 1100 further comprises an input module, configured to input the first question sentence and each second question sentence into a pre-trained model to determine the semantic similarity.

The embodiments provide a process of calculating a plurality of semantic similarities between a plurality of second question sentences and the first question sentence through the trained model by inputting the first question sentence and the second question sentences into the pre-trained model.

In the embodiment of the present application, by providing the pre-trained model in the question-answering system, in the case of obtaining a plurality of second question sentences, the plurality of second question sentences and the first question sentence are input into the pre-trained model, and then a plurality of semantic similarities between the plurality of second question sentences and the first question sentence can be calculated accurately.

In some embodiments of the present application, the sentence generation apparatus 1100 further comprises a selection module, configured to select the target corpus selected from at least two corpora based on identification information in the target question sentence, wherein the identification information corresponds to the sentence category; wherein, the sentence categories comprise at least one of a preset question category and a structured question category.

The embodiments provide that the question-answering system can select the target corpus from the at least two corpora based on the identification information corresponding to the target question sentence, that is, it is ensured that the question-answering system determines the matching target corpus after determining the target question sentence corresponding to the first question sentence.

In the embodiment of the present application, the target question sentence is a question sentence preset in the question-answering system, and each target question sentence is correspondingly disposed with relevant identification information. After the question-answering system determines the target question sentence corresponding to the first question sentence, it determines the sentence category of the target question sentence by reading the identification information of the target question sentence, to find the corresponding target corpus.

In the embodiment of the present application, the number of corpora disposed in the question-answering system matches the number of sentence categories and the number of identification information, and the corpora, sentence categories and identification information are in one-to-one correspondence.

In the embodiment of the present application, the sentence categories comprise at least one of the preset question categories and the structured question category. Sentences of the structured question category are typically simple real-time questions, which are stored in a structured manner. Sentences of the preset question category are typically complex questions, which are generally stored in a question-answer corresponding form, that is, corresponding standard answers are found through the sentences of the preset question category and then output as answer sentences.

In the embodiment of the present application, by arranging corresponding identification information in the target question sentences prestored in the question-answering system, it is ensured that after the question-answering system obtains the target question sentence matching the first question sentence, it can quickly determine the sentence category corresponding to the target question sentence, and determine the target corpus among the plurality of corpora accordingly.

In some embodiments of the present application, the sentence category is the structured question category; the determining module 1104 is specifically configured to determine a target query sentence based on the target question sentence; the sentence generation apparatus 1100 further comprises a querying module, configured to query the target corpus data in the target corpus by the target query sentence; and the generation module 1106 is specifically configured to generate the answer sentence based on the target corpus data.

The embodiments provide a specific process for the question-answering system to generate an answer sentence in the case that the target question sentence is a sentence of the structured question category.

In the embodiment of the present application, when the sentence category is a structured question, the target query sentence matching the target question sentence is retrieved. The target query sentence is configured to search for the corresponding target corpus data in the target corpus corresponding to the structured question category, and after the corresponding target corpus data is found, a corresponding answer sentence is generated through the target corpus data.

Wherein, the target query sentence is a structured query code.

In the embodiment of the present application, when the target question sentence is the sentence of the structured question category, the question-answering system can first determine the corresponding target query sentence based on the target question sentence, then find the target corpus data from the corresponding target corpus through the target query sentence, and further generate the corresponding answer sentence based on the target corpus data, to ensure the matching degree between the answer sentence and the target question sentence.

In some embodiments of the present application, the sentence generation apparatus 1100 further comprises: an extracting module, configured to extract noun words and the remaining words from the target question sentence; the determining module 1104, configured to determine a matching query sentence template based on the remaining words; and an input module, configured to input the noun words into the query sentence template to generate the target query sentence.

The embodiments provide a process of searching for the query sentence template of the target query sentence and determining the target query sentence based on the query sentence template when the target question sentence is the sentence of the structured question category.

In the embodiment of the present application, the target query sentences corresponding to the sentences of the structured question category are further structured query sentences. That is, different target query sentences correspond to different query sentence templates. The query sentence template can be determined by parsing the remaining words in the target question sentence, and then the noun words in the target question sentence are inserted into the query sentence template, to determine the target query sentence.

Wherein, the noun words refer to the entity words in the target question sentence, and the remaining words refer to non-entity words in a target sentence, i.e., all words except the noun words.

In the embodiment of the present application, the question-answering system can find the query sentence template matching the target question sentence by performing semantic analysis on the remaining words.

In the embodiment of the present application, after the corresponding query sentence template is determined, the noun words in the target question sentence are inserted into the query sentence template to obtain the corresponding target query sentence.

In the embodiment of the present application, by parsing the target question sentence of the structured question category, the noun words and the remaining words contained therein can be obtained, the corresponding query sentence template is found through the remaining words, and then the noun words are inserted into the query sentence template to obtain the corresponding target query sentence, thus improving the accuracy of obtaining the target query sentence, further improving the accuracy of the found target corpus data, and to enhance the matching degree between the generated answer sentence and the first question sentence.

In some embodiments of the present application, the sentence category is the preset question category; the sentence generation apparatus 1100 further comprises a searching module, configured to search for the answer sentence based on the target question sentence and the preset mapping relationship, wherein the preset mapping relationship refers to a corresponding relationship between the target question sentence and the answer sentence in the target corpus.

The embodiments provide a specific process for the question-answering system to generate the answer sentence in the case that the target question sentence is the sentence of the preset question category.

In the embodiment of the present application, the question-answering system stores the answer sentence corresponding to the target question sentence of the preset question category, as well as the preset mapping relationship between the answer sentence and the target question sentence of the preset question category.

Wherein, the target corpus corresponding to the target question sentence of the preset question category stores the preset mapping relationship between the answer sentence and the target question sentence of the preset question category, as well as the corresponding answer sentence. After the target question sentence of the preset question category is determined, the corresponding answer sentence is found by the preset mapping relationship in the target corpus, and then output.

In the embodiment of the present application, when the target question sentence is the sentence of the preset question category, the corresponding answer sentence can be automatically found from the target corpus through the preset mapping relationship, which ensures the relevance and matching degree between the answer sentence and the first question sentence.

In some embodiments of the present application, the sentence generation apparatus 1100 further comprises an updating module, configured to update the first question sentence based on the words in a preset vocabulary bank in response to receiving the first question sentence.

The embodiments provide updating the first question sentence through the words in the preset vocabulary bank after receiving the first question sentence, which can improve the accuracy and efficiency of the question-answering system in finding the target question sentence through semantic information.

In the embodiments of the present application, the preset vocabulary bank is a vocabulary pre-stored in the question-answering system. Updating the words in the first question sentence with the words in the preset vocabulary bank can improve the efficiency and accuracy of the question-answering system in semantically identifying the first question sentence.

In some embodiments of the present application, the extracting module is configured to extract the entity nouns from the first question sentence; the searching module is configured to search for the corresponding abstract nouns in the preset vocabulary bank based on the entity nouns; and the updating module is configured to replace the entity nouns in the first question sentence with the abstract nouns to update the first question sentence.

The embodiments provide the specific process of replacing the entity nouns in the first question sentence with the abstract nouns in the preset vocabulary bank.

Specifically, the entity nouns refer to nouns with a relatively narrow reference scope in the first question sentence, while the abstract nouns refer to nouns with a relatively broad reference scope in the preset vocabulary bank. There is a semantic inclusion relationship between the abstract nouns found through the entity nouns.

In the embodiment of the present application, different entity nouns may correspond to the same abstract noun in the preset vocabulary bank.

In the embodiment of the present application, by replacing the entity nouns in the first question sentence with the abstract nouns in the preset vocabulary bank after receiving the first question sentence, the computing power required for extracting the intention information for the first question sentence can be reduced, and the efficiency of obtaining the intention information corresponding to the first question sentence can further be improved.

In an embodiment of the present application, as shown in FIG. 12, a sentence generation apparatus 1200 is further provided, comprising a processor 1202 and a memory 1204, wherein the memory 1204 stores a program or an instructions therein; and the processor 1204 executes the program or instruction stored in the memory 1204 to perform the steps of the sentence generation method in any one of the above embodiments, thus having all the beneficial technical effects of the sentence generation method in any one of the above embodiments, which will not be repeated here.

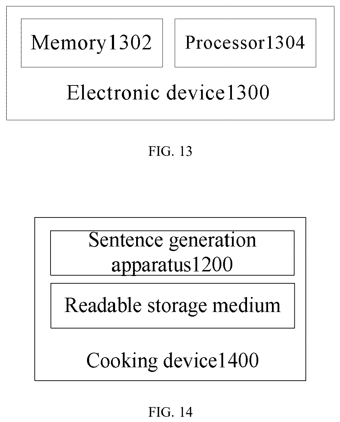

In an embodiment of the present application, an electronic device is further provided. As shown in FIG. 13, FIG. 13 shows a block diagram of the structure of an electronic device 1300 according to an embodiment of the present application. Wherein, the electronic device 1300 comprises:
a memory 1302, storing a program or an instruction therein; and
a processor1304,wherein, when the processor 1304 executes the program or instruction, the processor is caused to perform the steps of the method for processing conversation information in any one of the above embodiments; or when the processor 1304 executes the program or instruction, the processor is caused to perform the steps of the sentence generation method in any one of the above embodiments.

The electronic device 1300 provided in the embodiment comprises the memory 1302 and the processor 1304. When the program or instruction in the memory 1302 is executed by the processor 1304, the processor is caused to perform the steps of the method for processing conversation information in any one of the above embodiments; alternatively, when the program or instruction in the memory 1302 are executed by the processor 1304, the processor is caused to perform the steps of the sentence generation method in any one of the above embodiments. Therefore, the electronic device 1300 has all the beneficial effects of the method for processing conversation information in any one of the above embodiments, or the electronic device 1300 has all the beneficial effects of the sentence generation method in any one of the above embodiments, which will not be repeated here.

Specifically, the memory 1302 and the processor 1304 can be connected via a bus or other means. The processor 1304 can comprise one or more processing units, and can be a chip such as a Central Processing Unit (CPU), a Digital Signal Processor (DSP), an Application Specific Integrated Circuit (ASIC), or a Field Programmable Gate Array (FPGA).

In an actual application progress, the above electronic device 1300 can specifically be a smart device with data analyzing and data processing functions, such as a smartphone, a smart watch, a tablet computer, and a laptop computer, which is not specifically limited herein.

In an embodiment of the present application, a computer-readable storage medium is further provided, in which a program or an instruction are stored. When the program or instruction is executed by a processor, the processor is caused to perform the steps of the method for processing conversation information in any one of the above embodiments; alternatively, when the program or instruction is executed by a processor, the processor is caused to perform the steps of the sentence generation method in any one of the above embodiments.

According to the computer-readable storage medium provided in the embodiment of the present application, when the program or instruction stored therein is executed by a processor, the steps of the method for processing conversation information in any one of the above embodiments can be performed; alternatively, the steps of the sentence generation method in any one of the above embodiments can be performed. Therefore, the computer-readable storage medium has all the beneficial effects of the method for processing conversation information in any one of the above embodiments, or the computer-readable storage medium has all the beneficial effects of the sentence generation method in any one of the above embodiments, which will not be repeated here.

Specifically, the above computer-readable storage medium can comprise any medium capable of storing or transmitting information. Examples of computer-readable storage medium comprise an electronic circuit, a semiconductor memory device, a Read-Only Memory (ROM), a Random Access Memory (RAM), a Compact Disc Read-Only Memory (CD-ROM), a flash memory, an Erasable Read-Only Memory (EROM), a magnetic tape, a floppy disk, an optical disc, a hard disk, an optical fiber medium, a Radio Frequency (RF) link, an optical data storage device, etc. Code segments can be downloaded via computer networks such as the Internet and intranet.

In an embodiment of the present application, as shown in FIG. 14, a cooking device 1400 is further provided, comprising: the sentence generation apparatus 1200 in any one of the above embodiments, and/or the computer-readable storage medium in any one of the above embodiments, thus having all the beneficial technical effects of the sentence generation apparatus 1200 in any one of the above embodiments and/or the computer-readable storage medium in any one of the above embodiments, which will not be repeated here.

In some embodiments of the present application, the cooking device 1400 comprises any one of the following: a microwave oven, a steam-bake combo microwave oven, and an air fryer.

In the description of the present application, the terms of "first" and "second" are used only for the purpose of description and shall not be understood to indicate or imply any relative importance, unless otherwise explicitly specified or defined. The terms of "connect", "mount", "fix" and the like should be understood in a broad sense, for example, the term "connect" can be a fixed connection, a detachable connection, or an integral connection; it can be a direct connection or an indirect connection through an intermediate medium. For those of ordinary skills in the art, they may understand the specific meanings of the above-mentioned terms in the present application based on specific circumstances.

In the description of the present application, the description of the terms of "an embodiment", "some embodiments", "specific embodiment" and the like is intended to mean that the specific features, structures, materials or characteristics described in combination with the embodiments or examples are comprised in at least one embodiment or example of the present application. In the description, the illustrative expression of the above terms may not indicate the same embodiment or example. In addition, the specific features, structures, materials or characteristics as described may be combined with each other in an appropriate method in one or more of any embodiments or examples.

In addition, the technical solutions of the various embodiments of the present application may be combined with each other, provided that such combination is implementable by a person of ordinary skill in the art. If the combination of technical solutions results in contradictions or impossibility of implementation, such a combination shall be deemed non-existent and shall not be covered within the scope of protection claimed by the present application.

The above-mentioned are merely some embodiments of the present application and are not intended to limit the present application, and for one skilled in the art, various modifications and changes may be made to the present application. Any modifications, equivalent substitutions, improvements and so on should be covered within the scope of protection of the present application.

## Claims

1. A method for processing conversation information, comprising:
receiving a first input of a user, wherein the first input comprises first conversation information;
in response to the first input, performing matching of the first conversation information in a first database;
when the matching is successful, inputting second conversation information and first reply information that correspond to the first conversation information into a first model, wherein the first model outputs second reply information based on the second conversation information and the first reply information; and
displaying the second reply information;
wherein the first database is a professional knowledge base corresponding to a professional field to which the first conversation information belongs, and the first model is an intelligent dialogue model.

2. The method according to claim 1, wherein, after the performing the matching of the first conversation information in the first database, the method further comprises:
in a case that the matching in the first database fails, inputting the first conversation information into the first model, wherein the first model outputs third reply information based on the first conversation information; and
displaying the third reply information.

3. The method according to claim 1, wherein, the first database comprises a plurality of conversation information entries, and the performing the matching of the first conversation information in the first database comprises:
encoding the first conversation information;
performing similarity matching between the encoded first conversation information and the plurality of conversation information entries in the first database;
determining that the first conversation information successfully matches the first database in a case that conversation information semantically identical to the first conversation information exists in the first database; and
determining that the first conversation information fails to be matched with the first database in a case that any conversation information in the first database is semantically different from the first conversation information.

4. The method according to claim 3, wherein, before the encoding the first conversation information, the method further comprises:
performing preprocessing on the first conversation information to obtain preprocessed first conversation information;
wherein the preprocessing comprises at least one of the following: extracting a useful feature from the first conversation information, and filtering noise information from the first conversation information.

5. The method according to claim 3, wherein, before the encoding the first conversation information, the method further comprises:
in a case that a language type of the first conversation information is inconsistent with that of the first database, inputting the first conversation information into the first model, wherein the first model then converts the language type of the first conversation information into the language type of the first database; and
wherein the displaying the second reply information comprises:
displaying the second reply information based on the language type of the first conversation information.

6. The method according to any one of claims 3 to 5, wherein, the encoding comprises at least one of the following: vector encoding processing and cosine encoding.

7. The method according to any one of claims 3 to 5, wherein, a matching algorithm for similarity matching comprises at least one of the following: a similarity matching algorithm based on Euclidean distance, a similarity matching algorithm based on cosine distance, and a similarity matching algorithm based on a deep learning model.

8. A conversation information processing apparatus, comprising:
a receiving unit configured to receive a first input of a user, wherein the first input comprises first conversation information;
a processing unit configured to perform matching of the first conversation information in a first database in response to the first input; and in a case of a successful matching, inputting second conversation information and first reply information corresponding to the first conversation information into a first model, wherein the first model outputs second reply information based on the second conversation information and the first reply information; and
a display unit configured to display the second reply information;
wherein the first database is a professional knowledge base corresponding to a professional field to which the first conversation information belongs, and the first model is an intelligent dialogue model.

9. A conversation information processing system, comprising:
a first database in which a plurality of sets of conversation information and reply information are stored;
a first model, which is an intelligent dialogue model; and
a processor configured to perform steps of a method for processing conversation information according to any one of claims 1 to 7.

10. A sentence generation method, comprising:
in response to receiving a first question sentence, identifying intent information in the first question sentence;
determining a target question sentence matching the first question sentence based on the intent information; and
generating an answer sentence based on a target corpus selected from at least two corpora, wherein the target corpus matches a sentence category of the target question sentence.

11. The sentence generation method according to claim 10, wherein, the determining the target question sentence matching the first question sentence based on the intent information comprises:
obtaining at least two second question sentences based on the intent information, wherein the at least two second question sentences are associated with the intent information; and
selecting the target question sentence from the at least two second question sentences.

12. The sentence generation method according to claim 11, wherein, the selecting the target question sentence from the at least two second question sentences comprises:
obtaining a semantic similarity between the first question sentence and each of the at least two second question sentences; and
selecting the target question sentence from the at least two second question sentences based on the semantic similarity.

13. The sentence generation method according to claim 12, wherein, the obtaining the semantic similarity between the first question sentence and each of the at least two second question sentences comprises:
obtaining a first semantic vector of the first question sentence and a second semantic vector of each second question sentence; and
calculating the semantic similarity based on the first semantic vector and the second semantic vector.

14. The sentence generation method according to claim 12, wherein, the obtaining the semantic similarity between the first question sentence and each of the at least two second question sentences comprises:
inputting the first question sentence and each second question sentence into a pre-trained model to determine the semantic similarity.

15. The sentence generation method according to any one of claims 10 to 14, wherein, before the generating the answer sentence based on the target corpus selected from the at least two corpora, the sentence generation method comprises:
selecting the target corpus from the at least two corpora based on identification information in the target question sentence, wherein the identification information corresponds to the sentence category;
wherein, the sentence category comprise at least one of the following: a preset question category and a structured question category.

16. The sentence generation method according to claim 15, wherein, the sentence category is the structured question category;
the generating the answer sentence based on the target corpus selected from the at least two corpora comprises:
determining a target query sentence based on the target question sentence;
querying a target corpus data in the target corpus using the target query sentence; and
generating the answer sentence based on the target corpus data.

17. The sentence generation method according to claim 16, wherein, the determining the target query sentence based on the target question sentence comprises:
extracting noun words and remaining words from the target question sentence;
determining a matching query sentence template based on the remaining words; and
inputting the noun words into the query sentence template to generate the target query sentence.

18. The sentence generation method according to claim 15, wherein, the sentence category is the preset question category;
the generating the answer sentence based on the target corpus selected from the at least two corpora comprises:
retrieving the answer sentence based on the target question sentence and a preset mapping relationship, wherein the preset mapping relationship represents a correspondence between the target question sentence and the answer sentence in the target corpus.

19. The sentence generation method according to any one of claims 10 to 14, wherein, before the identifying the intention information in the first question sentence, the sentence generation method further comprises:
in response to receiving the first question sentence, updating the first question sentence based on a word in a preset vocabulary bank;.

20. The sentence generation method according to claim 19, wherein, the updating the first question sentence based on the word in the preset vocabulary bank in response to receiving the first question sentence comprises:
extracting entity nouns from the first question sentence;
searching for corresponding abstract nouns in the preset vocabulary bank based on the entity nouns; and
replacing the entity nouns in the first question sentence with the abstract nouns to update the first question sentence.

21. A sentence generation apparatus, comprising:
an identification module, configured to, in response to receiving a first question sentence, identify intention information in a first question sentence;
a determining module, configured to determine a target question sentence matching the first question sentence based on the intention information; and
a generation module, configured to generate an answer sentence based on a target corpus selected from at least two corpora, wherein the target corpus matches a sentence category of the target question sentence.

22. A sentence generation apparatus, comprising:
a processor; and
a memory storing a program or an instruction executable by the processor,
wherein, when the program or instruction is executed by the processor, the processor is caused to perform steps of a sentence generation method in any one of claims 10 to 20.

23. An electronic device, comprises:
a processor; and
a memory, storing a program or an instruction executable by the processor,
wherein, when the program or instruction is executed by the processor, the processor is caused to perform steps of a method in any one of claims 1 to 7, or to perform steps of a sentence generation method in any one of claims 10 to 20.

24. A computer-readable storage medium, storing a program or an instruction,
wherein, when the program or instruction is executed by a processor, steps of a method according to any one of claims 1 to 7 are performed, or steps of a sentence generation method in any one of claims 10 to 20 are performed.

25. A cooking device, comprising:
a sentence generation apparatus according to claim 21 or claim 22; and/or
a computer-readable storage medium according to claim 24.
